(19) Europäisches Patentamt
European Patent Office
Office européen des brevets

(11) **EP 4 561 220 A1**

(12) **EUROPEAN PATENT APPLICATION**
published in accordance with Art. 153(4) EPC

(43) Date of publication:
**28.05.2025 Bulletin 2025/22**

(21) Application number: **22952278.4**

(22) Date of filing: **26.07.2022**

(51) International Patent Classification (IPC):
*H04W 72/04* (2023.01)     *H04W 74/08* (2024.01)

(52) Cooperative Patent Classification (CPC):
**H04W 72/04; H04W 74/08**

(86) International application number:
**PCT/CN2022/108050**

(87) International publication number:
**WO 2024/020813 (01.02.2024 Gazette 2024/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **HU, Yuanzhou**
  **Shenzhen, Guangdong 518129 (CN)**
• **WANG, Lei**
  **Shenzhen, Guangdong 518129 (CN)**

(74) Representative: **Pfenning, Meinig & Partner mbB Patent- und Rechtsanwälte**
**Theresienhöhe 11a**
**80339 München (DE)**

(54) **REFERENCE SIGNAL TRANSMISSION METHOD AND COMMUNICATION APPARATUS**

(57)     This application provides a reference signal transmission method and a communication apparatus, to increase a capacity, and may be applied to a communication system. The method includes: A terminal device determines a first cyclic shift set based on a first mapping relationship and first information; then, the terminal device obtains a first cyclic shift of a reference signal sequence based on the first cyclic shift set; and the terminal device sends the reference signal sequence based on the first cyclic shift. The first mapping relationship includes a correspondence between $K$ delay ranges and $K$ cyclic shift sets. The $K$ delay ranges do not overlap each other, and the $K$ delay ranges are in one-to-one correspondence with the $K$ cyclic shift sets. $K$ is a positive integer greater than 1. Any cyclic shift set of the $K$ cyclic shift sets includes at least one cyclic shift, any two cyclic shifts in the $K$ cyclic shift sets are different, and the $K$ delay ranges are determined based on a maximum delay.

```
┌─────────────────┐                              ┌─────────────────┐
│ Terminal device │                              │ Network device  │
└─────────────────┘                              └─────────────────┘
┌──────────────────────────────┐
│ S301: Determine a first cyclic shift set
│ based on a first mapping relationship and
│ first information
└──────────────────────────────┘
┌──────────────────────────────┐
│ S302: Obtain a first cyclic shift of a
│ reference signal sequence based on the
│ first cyclic shift set
└──────────────────────────────┘
           S303: Send the reference signal sequence
                based on the first cyclic shift
                                          ┌──────────────────────────────┐
                                          │ S304: Obtain range information │
                                          └──────────────────────────────┘
                                          ┌──────────────────────────────┐
                                          │ S305: Determine the first cyclic shift
                                          │ set based on the range information and
                                          │ the first mapping relationship
                                          └──────────────────────────────┘
                                          ┌──────────────────────────────┐
                                          │ S306: Demodulate a reference signal
                                          │ based on the first cyclic shift set
                                          └──────────────────────────────┘
```

FIG. 3

EP 4 561 220 A1

**Description**

**TECHNICAL FIELD**

This application relates to the communication field, and in particular, to a reference signal transmission method and a communication apparatus.

**BACKGROUND**

In a communication system, when a plurality of terminal devices send different reference signals to a network device by using Zadoff-Chu (ZC) sequences that have a same time-frequency resource, a same length, and a same root, different cyclic shifts (cyclic shifts, CSs) may be used to implement orthogonal multiplexing, so that the network device can distinguish between different terminal devices. It can be learned that a quantity of cyclic shifts determines a capacity of the communication system.

In some solutions, the quantity of cyclic shifts is related to a largest multipath delay (which may be referred to as a maximum multipath delay) in multipath delays of all terminal devices served by the network device, time-domain lengths by which the reference signals shift using different cyclic shifts are greater than or equal to the maximum multipath delay, and time-domain lengths of shifts generated based on all cyclic shifts are less than or equal to a length of a symbol (symbol), that is, symbol duration.

It can be learned from the foregoing descriptions that the quantity of cyclic shifts is limited by the symbol duration and the maximum multipath delay. As a result, the capacity of the communication system determined based on the quantity of cyclic shifts is limited.

**SUMMARY**

Embodiments of this application provide a reference signal transmission method and a communication apparatus, to increase a capacity of a communication system.

To achieve the foregoing objective, the following technical solutions are used in this application.

According to a first aspect, a reference signal transmission method is provided. The reference signal transmission method includes: A terminal device determines a first cyclic shift set based on a first mapping relationship and first information; then, the terminal device obtains a first cyclic shift of a reference signal sequence based on the first cyclic shift set; and the terminal device sends the reference signal sequence based on the first cyclic shift. The first mapping relationship includes a correspondence between $K$ delay ranges and $K$ cyclic shift sets. The $K$ delay ranges do not overlap each other, and the $K$ delay ranges are in one-to-one correspondence with the $K$ cyclic shift sets. $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay.

Based on the reference signal transmission method provided in the first aspect, the terminal device may determine the first cyclic shift set based on the first mapping relationship and the first information, obtain the first cyclic shift of the reference signal sequence based on the first cyclic shift set, and send the reference signal sequence based on the first cyclic shift. In this way, one cyclic shift set may be determined for each delay range based on an upper limit of each delay range, so that a total quantity of cyclic shifts can be increased, and a capacity of a communication system can be increased.

In a possible design solution, the first information may include delay information of the terminal device. That the terminal device determines the first cyclic shift set based on the first mapping relationship and the first information may include: The terminal device determines the first cyclic shift set based on the first mapping relationship and the delay information of the terminal device. In this way, a delay of the terminal device can match the first cyclic shift set, to balance both the delay and interference.

For example, the terminal device may determine the delay information of the terminal device. In this way, signaling overheads can be reduced, thereby improving communication efficiency.

It should be noted that the terminal device may further receive the delay information from a network device, and determine the delay information as the delay information of the terminal device.

In a possible design solution, before the terminal device determines the first cyclic shift set based on the first mapping relationship and the first information, the method provided in the first aspect may further include: The terminal device receives the first information from a network device. The first information includes a first index. In this case, that the terminal device determines the first cyclic shift set based on the first mapping relationship and the first information may include: The terminal device determines the first cyclic shift set based on the first index and the first mapping relationship. In this way, the network device includes the first index in the first information to indicate the delay range, thereby reducing signaling overheads and improving communication efficiency.

In a possible design solution, that the terminal device obtains the first cyclic shift of the reference signal sequence based on the first cyclic shift set may include: The terminal device receives a second index; and the terminal device determines the first cyclic shift from the first cyclic shift set based on the second index. In this way, the network device may allocate a cyclic shift index, to reduce a conflict between different terminal devices and improve communication efficiency.

For example, the second index may be a cyclic shift index of the first cyclic shift.

In a possible design solution, the maximum delay may be a maximum multipath delay.

Optionally, the delay range may be a multipath delay range.

The maximum multipath delay may be a largest value of maximum multipath delays of time-domain channels of all terminal devices served by the network device. In this way, each multipath delay range may be determined based on the maximum multipath delay, and one cyclic shift set is determined for each multipath delay range based on an upper limit of each multipath delay range, to increase a total quantity of cyclic shifts and increase a capacity of a communication system. In addition, because a maximum value of a multipath delay of a time-domain channel of any terminal device does not exceed the maximum multipath delay, any terminal device may select a cyclic shift in an appropriate cyclic shift set, to avoid a conflict with another terminal device.

In a possible design solution, in a $k^{th}$ cyclic shift set of the $K$ cyclic shift sets, a minimum distance between any two cyclic shifts may be positively correlated with a largest delay in a $k^{th}$ delay range, $0 \leq k < K$, and $k$ is an integer.

In this way, the minimum distance between any two cyclic shifts in the $k^{th}$ cyclic shift set may be designed based on the largest delay in the $k^{th}$ delay range, and the minimum distance between the cyclic shifts in the $k^{th}$ cyclic shift set is reduced as much as possible, thereby increasing a quantity of cyclic shifts in the $k^{th}$ delay range, and further increasing a total quantity of cyclic shifts.

In a possible design solution, in the $k^{th}$ cyclic shift set of the $K$ cyclic shift sets, a quantity of cyclic shifts may be positively correlated with the largest delay in the $k^{th}$ delay range and symbol duration, $0 \leq k < K$, and $k$ is an integer.

In this way, the quantity of cyclic shifts in the $k^{th}$ cyclic shift set may be designed based on the largest delay in the $k^{th}$ delay range, and the quantity of cyclic shifts in the $k^{th}$ cyclic shift set is increased as much as possible, thereby increasing a total quantity of cyclic shifts.

In a possible design solution, the method provided in the first aspect may further include: The terminal device receives mapping relationship indication information from a network device. The mapping relationship indication information indicates the first mapping relationship. For example, when a plurality of mapping relationships are configured on the terminal device, the network device may indicate the first mapping relationship from the plurality of mapping relationships, to improve flexibility.

In a possible design solution, the method provided in the first aspect may further include: The terminal device receives second information from a network device. The second information indicates the maximum delay. In this way, the network device may indicate the maximum delay, and the terminal device may determine the first mapping relationship based on the maximum delay, to improve flexibility.

According to a second aspect, a reference signal transmission method is provided. The reference signal transmission method includes: A network device obtains range information; the network device determines a first cyclic shift set based on the range information and a first mapping relationship, where the first mapping relationship includes a correspondence between $K$ delay ranges and $K$ cyclic shift sets, the $K$ delay ranges are in one-to-one correspondence with the $K$ cyclic shift sets, the $K$ delay ranges do not overlap each other, $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay; and the network device receives a reference signal sequence, and demodulates the reference signal sequence based on the first cyclic shift set.

In a possible design solution, the range information may include delay information of a terminal device.

In a possible design solution, before the network device receives the reference signal sequence, the method provided in the second aspect may further include: The network device sends first information. The first information includes a first index.

In a possible design solution, the method provided in the second aspect may further include: The network device sends a second index.

For example, the second index may be a cyclic shift index of a first cyclic shift.

In a possible design solution, the maximum delay may be a maximum multipath delay.

Optionally, the delay range may be a multipath delay range.

In a possible design solution, in a $k^{th}$ cyclic shift set of the $K$ cyclic shift sets, a minimum distance between any two cyclic shifts is positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts is positively correlated with the largest delay in the $k^{th}$ delay range and symbol duration, $0 \leq k < K$, and $k$ is an integer.

In a possible design solution, the method provided in the second aspect further includes: The network device sends mapping relationship indication information. The mapping relationship indication information indicates the first mapping relationship.

In a possible design solution, the method provided in the second aspect may further include: The network device sends second information. The second information indicates the maximum delay.

In addition, for a technical effect of the reference signal transmission method in the second aspect, refer to the technical effect of the reference signal transmission method in the first aspect. Details are not described herein again.

According to a third aspect, a reference signal transmission method is provided. $K$ cyclic shift sets are configured in a terminal device. Any cyclic shift set of the $K$ cyclic shift sets includes at least one cyclic shift, the $K$ cyclic shift sets are in one-to-one correspondence with $K$ delay ranges, the $K$ delay ranges do not overlap each other, and $K$ is a positive integer greater than 1. Any two cyclic shifts in the $K$ cyclic shift sets are different, and the $K$ delay ranges are determined based on a maximum delay. The reference signal transmission method includes: The terminal device receives a third index from a network device; the terminal device determines a first cyclic shift set based on the third index; the terminal device determines a cyclic shift in the first cyclic shift set as a first cyclic shift; and the terminal device sends a reference signal sequence based on the first cyclic shift.

In a possible design solution, that the terminal device determines the cyclic shift in the first cyclic shift set as the first cyclic shift may include: The terminal device randomly determines the cyclic shift in the first cyclic shift set as the first cyclic shift.

In a possible design solution, the method provided in the third aspect may further include: The terminal device receives a second index from the network device. That the terminal device determines the cyclic shift in the first cyclic shift set as the first cyclic shift may include: The terminal device determines, as the first cyclic shift, a cyclic shift that is in the first cyclic shift set and that corresponds to the second index.

In a possible design solution, in a $k^{th}$ cyclic shift set of the $K$ cyclic shift sets, a minimum distance between any two cyclic shifts is positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts is positively correlated with the largest delay in the $k^{th}$ delay range and symbol duration, $0 \leq k < K$, and $k$ is an integer.

In a possible design solution, the method provided in the third aspect may further include: The terminal device receives group indication information a the network device. The group indication information indicates the $K$ cyclic shift sets.

In addition, for a technical effect of the reference signal transmission method in the third aspect, refer to the technical effect of the reference signal transmission method in the first aspect. Details are not described herein again.

According to a fourth aspect, a reference signal transmission method is provided. The reference signal transmission method includes: A network device obtains range information; the network device determines a first cyclic shift set based on the range information and first mapping relationship; the network device receives a reference signal sequence; and the network device demodulates the reference signal sequence based on the first cyclic shift set. The first mapping relationship includes a correspondence between $K$ delay ranges and $K$ cyclic shift sets. The $K$ delay ranges are in one-to-one correspondence with the $K$ cyclic shift sets, and the $K$ delay ranges do not overlap each other. $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay.

In a possible design solution, the method provided in the fourth aspect may further include: The network device sends a third index.

In a possible design solution, in a $k^{th}$ cyclic shift set of the $K$ cyclic shift sets, a minimum distance between any two cyclic shifts is positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts is positively correlated with the largest delay in the $k^{th}$ delay range and symbol duration, $0 \leq k < K$, and $k$ is an integer.

In a possible design solution, the method provided in the fourth aspect may further include: The network device sends group indication information. The group indication information indicates the $K$ cyclic shift sets.

In addition, for a technical effect of the reference signal transmission method in the fourth aspect, refer to the technical effect of the reference signal transmission method in the first aspect. Details are not described herein again.

According to a fifth aspect, a communication apparatus is provided. The communication apparatus includes a processing module and a transceiver module. The processing module is configured to determine a first cyclic shift set based on a first mapping relationship and first information. The first mapping relationship includes a correspondence between $K$ delay ranges and $K$ cyclic shift sets. The $K$ delay ranges do not overlap each other, and the $K$ delay ranges are in one-to-one correspondence with the $K$ cyclic shift sets. $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay. The processing module is configured to obtain a first cyclic shift of a reference signal sequence based on the first cyclic shift set. The transceiver module is configured to send the reference signal sequence based on the first cyclic shift.

In a possible design solution, the first information may include delay information of a terminal device. The processing module may be specifically configured to determine the first cyclic shift set based on the first mapping relationship and the delay information of the terminal device.

In a possible design solution, the transceiver module may be further configured to receive the first information from a network device. The first information includes a first index. The processing module may be specifically configured to determine the first cyclic shift set based on the first index and the first mapping relationship.

In a possible design solution, the processing module may be specifically configured to: receive a second index by using the transceiver module; and determine the first cyclic shift from the first cyclic shift set based on the second index.

In a possible design solution, the maximum delay may be a maximum multipath delay.

Optionally, the delay range may be a multipath delay range.

In a possible design solution, in a $k^{th}$ cyclic shift set of the $K$ cyclic shift sets, a minimum distance between any two cyclic shifts may be positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts may be positively correlated with the largest delay in the $k^{th}$ delay range and symbol duration, $0 \leq k < K$, and $k$ is an integer.

In a possible design solution, the transceiver module may be further configured to receive mapping relationship indication information from a network device. The mapping relationship indication information indicates the first mapping relationship.

In a possible design solution, the transceiver module may be further configured to receive second information from a network device. The second information indicates the maximum delay.

Optionally, the transceiver module may include a receiving module and a sending module. The transceiver module is configured to implement a sending function and a receiving function of the communication apparatus in the fifth aspect.

Optionally, the communication apparatus in the fifth aspect may further include a storage module. The storage module stores a program or instructions. When the processing module executes the program or the instructions, the communication apparatus is enabled to perform the reference signal transmission method in the first aspect.

It should be noted that, the communication apparatus in the fifth aspect may be a terminal device, or may be a chip (system) or another part or component that can be disposed in the terminal device, or may be an apparatus including the terminal device. This is not limited in this application.

In addition, for a technical effect of the communication apparatus in the fifth aspect, refer to the technical effect of the reference signal transmission method in the first aspect. Details are not described herein again.

According to a sixth aspect, a communication apparatus is provided. The communication apparatus includes a processing module and a transceiver module. The processing module is configured to obtain range information. The processing module is further configured to determine a first cyclic shift set based on the range information and a first mapping relationship. The first mapping relationship includes a correspondence between $K$ delay ranges and $K$ cyclic shift sets. The $K$ delay ranges are in one-to-one correspondence with the $K$ cyclic shift sets, and the $K$ delay ranges do not overlap each other. $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay. The transceiver module is configured to receive a reference signal sequence. The processing module is further configured to demodulate the reference signal sequence based on the first cyclic shift set.

In a possible design solution, the range information may include delay information of a terminal device.

In a possible design solution, the transceiver module may be further configured to send first information. The first information includes a first index.

In a possible design solution, the transceiver module may be further configured to send a second index.

In a possible design solution, the maximum delay may be a maximum multipath delay.

In a possible design solution, the delay range may be a multipath delay range.

In a possible design solution, in a $k^{th}$ cyclic shift set of the $K$ cyclic shift sets, a minimum distance between any two cyclic shifts may be positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts may be positively correlated with the largest delay in the $k^{th}$ delay range and symbol duration, $0 \leq k < K$, and $k$ is an integer.

In a possible design solution, the transceiver module may be further configured to send mapping relationship indication information. The mapping relationship indication information indicates the first mapping relationship.

In a possible design solution, the transceiver module may be further configured to send second information. The second information indicates the maximum delay.

Optionally, the transceiver module may include a receiving module and a sending module. The transceiver module is configured to implement a sending function and a receiving function of the communication apparatus in the sixth aspect.

Optionally, the communication apparatus in the sixth aspect may further include a storage module. The storage module stores a program or instructions. When the processing module executes the program or the instructions, the communication apparatus is enabled to perform the reference signal transmission method in the second aspect.

It should be noted that, the communication apparatus in the sixth aspect may be a network device, or may be a chip (system) or another part or component that can be disposed in the network device, or may be an apparatus including the network device. This is not limited in this application.

In addition, for a technical effect of the communication apparatus in the sixth aspect, refer to the technical effect of the reference signal transmission method in the first aspect. Details are not described herein again.

According to a seventh aspect, a communication apparatus is provided. $K$ cyclic shift sets are configured in the communication apparatus. Any cyclic shift set of the $K$ cyclic shift sets includes at least one cyclic shift, the $K$ cyclic shift sets are in one-to-one correspondence with $K$ delay ranges, the $K$ delay ranges do not overlap each other, and $K$ is a positive integer greater than 1. Any two cyclic shifts in the $K$ cyclic shift sets are different, and the $K$ delay ranges are determined based on a maximum delay. A transceiver module is configured to receive a third index from a network device. A processing module is configured to: determine a first cyclic shift set based on the third index, and determine a cyclic shift in the first cyclic shift set as a first cyclic shift.

In a possible design solution, the processing module is specifically configured to randomly determine the cyclic shift in the first cyclic shift set as the first cyclic shift.

In a possible design solution, the transceiver module is further configured to receive a second index from the network device. The processing module is specifically configured to determine, as the first cyclic shift by a terminal device, a cyclic shift that is in the first cyclic shift set and that corresponds to the second index.

In a possible design solution, in a $k^{th}$ cyclic shift set of the $K$ cyclic shift sets, a minimum distance between any two cyclic shifts is positively correlated with a largest delay in a $k^{th}$ delay range, $0 \le k < K$, and $k$ is an integer.

In a possible design solution, in the $k^{th}$ cyclic shift set of the $K$ cyclic shift sets, a quantity of cyclic shifts is positively correlated with the largest delay in the $k^{th}$ delay range and symbol duration, $0 \le k < K,$ and $k$ is an integer.

In a possible design solution, the transceiver module is further configured to receive group indication information from a network device. The group indication information indicates the $K$ cyclic shift sets.

Optionally, the transceiver module may include a receiving module and a sending module. The transceiver module is configured to implement a sending function and a receiving function of the communication apparatus in the seventh aspect.

Optionally, the communication apparatus in the seventh aspect may further include a storage module. The storage module stores a program or instructions. When the processing module executes the program or the instructions, the communication apparatus is enabled to perform the reference signal transmission method in the third aspect.

It should be noted that, the communication apparatus in the seventh aspect may be a terminal device, or may be a chip (system) or another part or component that can be disposed in the terminal device, or may be an apparatus including the terminal device. This is not limited in this application.

In addition, for a technical effect of the communication apparatus in the seventh aspect, refer to the technical effect of the reference signal transmission method in the first aspect. Details are not described herein again.

According to an eighth aspect, a communication apparatus is provided. The communication apparatus includes a processing module and a transceiver module.

The transceiver module is configured to obtain range information. The processing module is configured to determine a first cyclic shift set based on the range information and a first mapping relationship. The transceiver module is further configured to receive a reference signal sequence. The processing module is further configured to demodulate the reference signal sequence based on the first cyclic shift set. The first mapping relationship includes a correspondence between $K$ delay ranges and $K$ cyclic shift sets. The $K$ delay ranges are in one-to-one correspondence with the $K$ cyclic shift sets, and the $K$ delay ranges do not overlap each other. $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay.

In a possible design solution, the transceiver module is further configured to send a third index.

In a possible design solution, in a $k^{th}$ cyclic shift set of the $K$ cyclic shift sets, a minimum distance between any two cyclic shifts is positively correlated with a largest delay in a $k^{th}$ delay range, $0 \le k < K,$ and $k$ is an integer.

In a possible design solution, in the $k^{th}$ cyclic shift set of the $K$ cyclic shift sets, a quantity of cyclic shifts is positively correlated with the largest delay in the $k^{th}$ delay range and symbol duration, $0 \le k < K,$ and $k$ is an integer.

In a possible design solution, the transceiver module is further configured to send group indication information. The group indication information indicates the $K$ cyclic shift sets.

Optionally, the transceiver module may include a receiving module and a sending module. The transceiver module is configured to implement a sending function and a receiving function of the communication apparatus in the eighth aspect.

Optionally, the communication apparatus in the eighth aspect may further include a storage module. The storage module stores a program or instructions. When the processing module executes the program or the instructions, the communication apparatus is enabled to perform the reference signal transmission method in the fourth aspect.

It should be noted that, the communication apparatus in the eighth aspect may be a network device, or may be a chip (system) or another part or component that can be disposed in the network device, or may be an apparatus including the network device. This is not limited in this application.

In addition, for a technical effect of the communication apparatus in the eighth aspect, refer to the technical effect of the reference signal transmission method in the first aspect. Details are not described herein again.

According to a ninth aspect, a communication apparatus is provided. The communication apparatus is configured to perform the reference signal transmission method according to any one of the implementations of the first aspect to the fourth aspect.

In this application, the communication apparatus in the ninth aspect may be the terminal device according to any one of the first aspect or the third aspect, the network device according to any one of the second aspect or the fourth aspect, a chip (system) or another part or component that can be disposed in the terminal device or the network device, or an apparatus including the terminal device or the network device.

It should be understood that the communication apparatus in the ninth aspect includes a corresponding module, unit, or means (means) for implementing the reference signal transmission method according to any one of the first aspect to the fourth aspect. The module, the unit, or the means may be implemented by hardware, or may be implemented by software, or may be implemented by hardware executing corresponding software. The hardware or the software includes one or more modules or units configured to perform functions related to the foregoing reference signal transmission method.

According to a tenth aspect, a communication apparatus is provided. The communication apparatus includes a processor, and the processor is configured to perform the reference signal transmission method according to any one of the possible implementations of the first aspect to the fourth aspect.

In a possible design solution, the communication apparatus in the tenth aspect may further include a transceiver. The transceiver may be a transceiver circuit or an interface circuit. The transceiver may be used by the communication apparatus in the tenth aspect to communicate with another communication apparatus.

In a possible design solution, the communication apparatus in the tenth aspect may further include a memory. The memory and the processor may be integrated together, or may be disposed separately. The memory may be configured to store a computer program and/or data related to the reference signal transmission method according to any one of the first aspect to the fourth aspect.

In this application, the communication apparatus in the tenth aspect may be the terminal device in the first aspect or the third aspect, the network device in the second aspect or the fourth aspect, a chip (system) or another part or component that can be disposed in the terminal device or the network device, or an apparatus including the terminal device or the network device.

According to an eleventh aspect, a communication apparatus is provided. The communication apparatus includes a processor. The processor is coupled to a memory, and the processor is configured to execute a computer program stored in the memory, so that the communication apparatus performs the reference signal transmission method according to any one of the possible implementations of the first aspect to the fourth aspect.

In a possible design solution, the communication apparatus in the eleventh aspect may further include a transceiver. The transceiver may be a transceiver circuit or an interface circuit. The transceiver may be used by the communication apparatus in the eleventh aspect to communicate with another communication apparatus.

In this application, the communication apparatus in the eleventh aspect may be the terminal device in the first aspect or the third aspect, the network device in the second aspect or the fourth aspect, a chip (system) or another part or component that can be disposed in the terminal device or the network device, or an apparatus including the terminal device or the network device.

According to a twelfth aspect, a communication apparatus is provided, including a processor and a memory. The memory is configured to store a computer program, and when the processor executes the computer program, the communication apparatus is enabled to perform the reference signal transmission method according to any one of the implementations of the first aspect to the fourth aspect.

In a possible design solution, the communication apparatus in the twelfth aspect may further include a transceiver. The transceiver may be a transceiver circuit or an interface circuit. The transceiver may be used by the communication apparatus in the twelfth aspect to communicate with another communication apparatus.

In this application, the communication apparatus in the twelfth aspect may be the terminal device in the first aspect or the third aspect, the network device in the second aspect or the fourth aspect, a chip (system) or another part or component that can be disposed in the terminal device or the network device, or an apparatus including the terminal device or the network device.

According to a thirteenth aspect, a communication apparatus is provided, including a processor. The processor is configured to: be coupled to a memory; and after reading a computer program in the memory, perform, based on the computer program, the reference signal transmission method according to any one of the implementations of the first aspect to the fourth aspect.

In a possible design solution, the communication apparatus in the thirteenth aspect may further include a transceiver. The transceiver may be a transceiver circuit or an interface circuit. The transceiver may be used by the communication apparatus in the thirteenth aspect to communicate with another communication apparatus.

In this application, the communication apparatus in the thirteenth aspect may be the terminal device in the first aspect or the third aspect, the network device in the second aspect or the fourth aspect, a chip (system) or another part or component that can be disposed in the terminal device or the network device, or an apparatus including the terminal device or the network device.

In addition, for a technical effect of the communication apparatus in the ninth aspect to the thirteenth aspect, refer to a technical effect of the reference signal transmission method in the first aspect to the fourth aspect. Details are not described herein again.

According to a fourteenth aspect, a processor is provided. The processor is configured to perform the reference signal transmission method according to any one of the possible implementations of the first aspect to the fourth aspect.

According to a fifteenth aspect, a communication system is provided. The communication system includes one or more terminal devices in the first aspect and one or more network devices in the second aspect. Alternatively, the communication system includes one or more terminal devices in the third aspect and one or more network devices in the fourth aspect. The terminal device may be configured to perform the reference signal transmission method according to any one of the first aspect or the third aspect, and the network device is configured to perform the reference signal transmission method according to any one of the second aspect or the fourth aspect.

According to a sixteenth aspect, a computer-readable storage medium is provided, including a computer program or instructions. When the computer program or the instructions are run on a computer, the computer is enabled to perform the reference signal transmission method according to any one of the possible implementations of the first aspect to the fourth aspect.

According to a seventeenth aspect, a computer program product is provided, including a computer program or instructions. When the computer program or the instructions are run on a computer, the computer is enabled to perform the reference signal transmission method according to any one of the possible implementations of the first aspect to the fourth aspect.

## BRIEF DESCRIPTION OF DRAWINGS

FIG. 1 is a diagram of a relationship between a cyclic shift area and symbol duration according to an embodiment of this application;

FIG. 2 is a diagram of an architecture of a communication system according to an embodiment of this application;

FIG. 3 is a first schematic flowchart of a reference signal transmission method according to an embodiment of this application;

FIG. 4 is a diagram of relationships between cyclic shifts and symbol duration in different scenarios according to an embodiment of this application;

FIG. 5 is a second schematic flowchart of a reference signal transmission method according to an embodiment of this application;

FIG. 6 is a first diagram of a structure of a communication apparatus according to an embodiment of this application; and

FIG. 7 is a second diagram of a structure of a communication apparatus according to an embodiment of this application.

## DESCRIPTION OF EMBODIMENTS

The following describes technical terms in embodiments of this application.

1. A maximum multipath delay is a largest multipath delay in multipath delays (delays corresponding to a plurality of channels/delays corresponding to a plurality of transmission paths) of all terminal devices in a service range of a network device. For example, there are three terminal devices in the service range of the network service. A maximum value of a multipath delay of a terminal device 0 is A0, a maximum value of a multipath delay of a terminal device 1 is A1, and a maximum value of a multipath delay of a terminal device 0 is A2. In this case, the maximum multipath delay may be a largest value in A0, A1, and A2. It should be noted that values of maximum multipath delays in different application environments may be different. The network device may indicate different maximum multipath delays by using signaling based on different application scenarios, that is, indicate different maximum multipath delays.

2. A root mean square delay of a terminal device may be a delay determined based on a second-order moment of a power delay spectrum of a channel of the terminal device. Root mean square delays of different terminal devices may be different, and a maximum root mean square delay may be a largest value of root mean square delays of all terminal devices.

3. An average delay of a terminal device may be a delay determined based on a first-order moment of a power delay spectrum of a channel of the terminal device. Average delays of different terminal devices may be different, and a maximum average delay may be a largest value of average delays of all terminal devices.

4. A time window may be duration of a power delay spectrum in which power accounts for q percent of total power of a power delay spectrum of a terminal device in the power delay spectrum of the terminal device. Time windows of different terminal devices may be different, and a maximum time window may be a largest value of time windows of all terminal devices. For example, the power delay spectrum of the terminal device is represented as P, and a power value in a $t^{th}$ time window is represented as P(t). A start moment of t is a moment t0, and an end moment of t is a moment t3. A moment t1 and a moment t2 may be determined, where the moment t1 does not exceed the moment t2, and neither the moment t1 nor the moment t2 is less than the moment t0, nor does it exceed the moment t3. A sum of power of power delay spectrums between the moment t1 and the moment t2 accounts for q percent of the total power (to be specific, a sum of power of power delay spectrums between the moment t0 and the moment t3), and a sum of power of power delay spectrums between the moment t0 and the moment t1 and a sum of power of power delay spectrums between the moment t2 and the moment t3 are the same. In this case, a value of t2-t1 may be considered as a length of the time window. A value of q may be predefined, for example, 50.

5. Duration of a cyclic prefix of a symbol: The symbol may be a symbol of data or a symbol of a reference signal. It may be understood that, because different paths of a multipath channel may have different channel delays, using the cyclic prefix may resist intersymbol interference caused by the multipath channel, and the duration of the cyclic prefix is generally close to or exceeds a maximum multipath delay.

The symbol may be an orthogonal frequency division multiplexing (Orthogonal Frequency Division Multiplexing, OFDM) symbol, or may be a single-carrier frequency division multiple access (Single-carrier Frequency Division Multiple Access, SC-FDMA) symbol. This is not limited in this application. The symbol may also be referred to as a time-domain symbol.

6. A maximum delay may be a predefined delay. Alternatively, the maximum delay may be a delay notified by a network device to a terminal device by using signaling. The maximum delay may be determined based on one or more of the following: a maximum multipath delay, a maximum root mean square delay, a maximum average delay, a maximum time window, or duration of a cyclic prefix of a symbol. For example, the maximum delay may be one of the following: the maximum multipath delay, the maximum root mean square delay, the maximum average delay, the maximum time window, or the duration of the cyclic prefix of the symbol.

7. A cyclic shift may also be referred to as a cyclic shift value, and may refer to a quantity of bits for performing a cyclic shift.

8. A cyclic shift area may be an area of a time period of a time-domain channel. A network device may perform channel estimation based on a received reference signal of one or more symbols, to obtain an estimated frequency-domain channel and a time-domain channel corresponding to the frequency-domain channel. The time-domain channel may be divided into one or more cyclic shift areas, and different cyclic shift areas do not overlap. One cyclic shift in a $k^{th}$ cyclic shift set of K cyclic shift sets corresponds to one cyclic shift area, and any two cyclic shifts in the $k^{th}$ cyclic shift set correspond to two different cyclic shift areas. A size of a cyclic shift area (in other words, duration of the cyclic shift area) corresponding to the $k^{th}$ cyclic shift set may be positively correlated with a largest delay in a delay range. k is an integer greater than or equal to 0, K is an integer greater than 1, and k < K.

For example, when a terminal device selects a cyclic shift in a cyclic shift set to send a reference signal sequence, the network device receives the reference signal sequence sent by the terminal device, and performs channel estimation to obtain a time-domain channel of the terminal device. In this case, most or all energy of the time-domain channel of the terminal device is included in a cyclic shift area corresponding to the cyclic shift selected by the terminal device.

The following describes solutions related to embodiments of this application.

In a communication system, when a plurality of terminal devices send different reference signals to a network device by using ZC sequences that have a same time-frequency resource, a same length, and a same root, different CSs may be used to implement orthogonal multiplexing, so that the network device can distinguish between different terminal devices. It can be learned that a quantity of CSs determines a capacity of the communication system.

In some possible embodiments, the quantity of CSs is related to a largest multipath delay (which may also be referred to as a maximum multipath delay) in multipath delays of all terminal devices served by the network device, time-domain lengths by which the reference signals shift using different CSs are greater than or equal to the maximum multipath delay, and time-domain lengths of shifts generated based on all cyclic shifts, that is, cyclic shift (cyclic shift, CS) areas, are less than or equal to a length of a symbol for transmitting a reference signal, that is, symbol duration. In other words, the quantity of cyclic shifts and time-domain channels of all the terminal devices served by the network device may satisfy the following relationship: $N_{cs,base} T_{max} \leq T_{symb}$. $N_{cs,base}$ is the quantity of cyclic shifts (which may also be referred to as a quantity of basic cyclic shifts) in a service range of the network device, $T_{max}$ is a maximum delay of the terminal device in the service range of the network device, and $T_{symb}$ is the symbol duration.

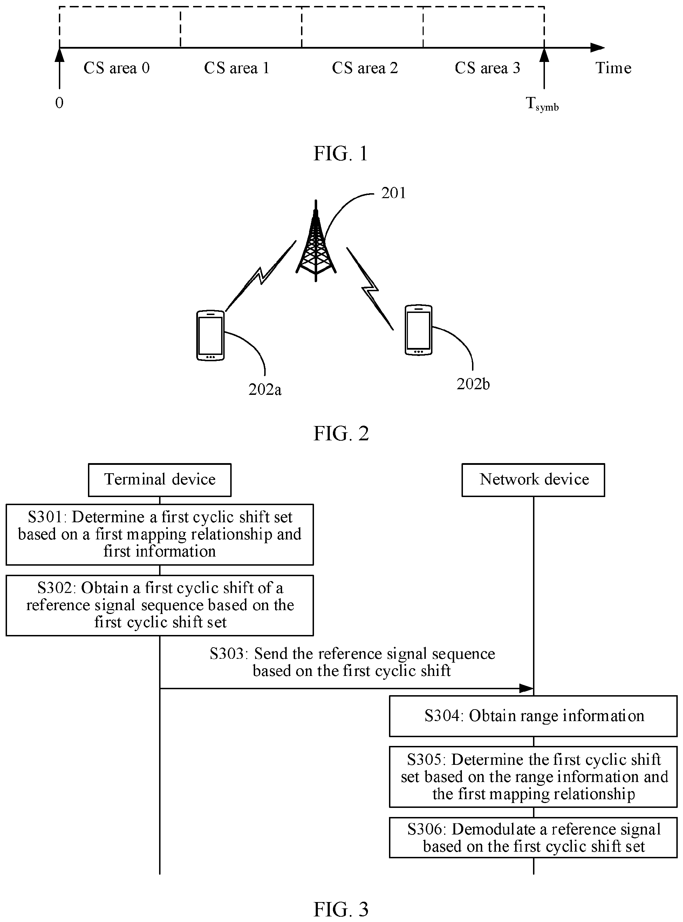

If the network device determines the reference signals based on a delay, such as a multipath delay, of the terminal device in the service range of the network device, where a maximum quantity of terminal devices that can be distinguished by using the reference signals is 4, $4 * T_{max} \leq T_{symb}$. $4 * T_{max} = T_{symb}$ is used as an example. A relationship between the cyclic shift area and the symbol duration is shown in FIG. 1. In this case, total duration of a CS area 0 to a CS area 3 is equal to $T_{symb}$.

It can be learned from the foregoing descriptions that the quantity of CSs is limited by the symbol duration and the maximum multipath delay. As a result, the capacity of the communication system determined based on the quantity of cyclic shifts is limited.

To resolve the foregoing technical problem, embodiments of this application provide a reference signal transmission method. The method includes: A terminal device determines a first cyclic shift set based on a first mapping relationship and first information; then, the terminal device obtains a first cyclic shift of a reference signal sequence based on the first cyclic shift set; and the terminal device sends the reference signal sequence based on the first cyclic shift. The first mapping relationship includes a correspondence between $K$ delay ranges and $K$ cyclic shift sets. The $K$ delay ranges do not overlap each other, and the $K$ delay ranges are in one-to-one correspondence with the $K$ cyclic shift sets. $K$ is a positive integer greater than 1. Any cyclic shift set of the $K$ cyclic shift sets includes at least one cyclic shift, any two cyclic shifts in the $K$ cyclic shift sets are different, and the $K$ delay ranges are determined based on a maximum delay.

Alternatively, a plurality of cyclic shift sets may be configured in a terminal device, a network device may specify a first cyclic shift set from the plurality of cyclic shift sets, and the terminal device may further determine a first cyclic shift from the first cyclic shift set, to send a reference signal based on the first cyclic shift. In this way, one cyclic shift set may be determined for each delay range, so that a total quantity of cyclic shifts can be increased, and a capacity of a communication system can be increased. The following describes the technical solutions in this application with reference to the accompanying drawings.

The technical solutions in embodiments of this application may be applied to various communication systems, for example, a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system. All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are for representing giving an example, an illustration, or descriptions. Any embodiment or design solution described as an "example" in this application should not be explained as being more preferred or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding (corresponding or relevant)", and "corresponding (corresponding)" may sometimes be used interchangeably. It should be noted that meanings expressed by the terms are consistent when differences of the terms are not emphasized.

In embodiments of this application, a subscript, for example, $W_1$, may sometimes be written in non-subscript form, for example, W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

To better understand embodiments of this application, a communication system shown in FIG. 2 is first used as an example to describe in detail a communication system applicable to embodiments of this application. For example, FIG. 2 is a diagram of an architecture of a communication system to which a reference signal transmission method is applicable according to an embodiment of this application.

As shown in FIG. 2, the communication system includes a network device 201 and terminal devices (202a and 202b).

Communication connections may be established between the network device 201 and the terminal devices (202a and 202b).

The network device is a device that is located on a network side of the communication system and that has a wireless transceiver function, or a chip or a chip system that can be disposed in the device. The network device includes but is not limited to: an access point (access point, AP), for example, a home gateway, a router, a server, a switch, or a bridge, in a wireless fidelity (wireless fidelity, Wi-Fi) system, a macro base station, a micro base station (also referred to as a small cell), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission reception point, TRP, or a transmission point, TP), or the like. The network device may alternatively be a gNB, a satellite, an uncrewed aerial vehicle, or a transmission point (TRP or TP) in a 5G system, for example, a new radio (new radio, NR) system, or one antenna panel or a group of antenna panels (including a plurality of antenna panels) of a base station in the 5G system. The network device may alternatively be a network node, for example, a baseband unit (BBU) or a distributed unit (distributed unit, DU), that constitutes a gNB or a transmission point, a roadside unit (roadside unit, RSU) having a base station function, or the like.

It should be noted that the network device may be a cell (cell), in other words, one network device corresponds to one cell. When the network device is a base station, the base station may include a BBU and a remote radio unit (remote radio unit, RRU). The BBU and the RRU may be deployed in different places. For example, the RRU is remotely deployed in a heavy-traffic area, and the BBU is deployed in a central equipment room. Alternatively, the BBU and the RRU may be deployed in a same equipment room. Alternatively, the BBU and the RRU may be different components in a same rack.

The terminal device is a terminal (terminal) that accesses the communication system and that has a wireless transceiver function, or a chip or a chip system that can be disposed in the terminal. The terminal device may also be referred to as an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a cellular phone (cellular phone), a smart phone (smart phone), a wireless data card, a personal digital assistant (personal digital assistant, PDA) computer, a wireless modem (modem), a handheld device (handheld device), a laptop computer (laptop computer), a machine type communication (machine type communication, MTC) terminal, a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (telemedicine), a wireless terminal in a smart grid (smart grid), a wireless terminal in transportation security (transportation safety), a wireless terminal in a smart city (smart city), a wireless terminal in a smart home (smart home), a vehicle-mounted terminal, an RSU that has a terminal function, an uncrewed aerial vehicle, or the like. The terminal device in this application may alternatively be an in-vehicle module, an in-vehicle assembly, an in-vehicle component, an in-vehicle chip, or an in-vehicle unit that is built in a vehicle as one or more components or units. The vehicle may implement the reference signal transmission method provided in this application by using the in-vehicle module, the in-vehicle assembly, the in-vehicle component, the in-vehicle chip, or the in-vehicle unit that is built in the vehicle.

It should be noted that the reference signal transmission method provided in embodiments of this application is applicable to communication between any two nodes shown in FIG. 2, for example, between terminal devices, between network devices, and between the terminal device and the network device. For a specific implementation, refer to the following method embodiments. Details are not described herein.

It should be noted that the solutions in embodiments of this application may alternatively be applied to another communication system, and a corresponding name may alternatively be replaced with a name of a corresponding function in the another communication system.

It should be understood that FIG. 2 is merely a simplified diagram that is used as an example for ease of understanding. The communication system may further include another network device and/or another terminal device that are/is not shown in FIG. 2.

The following describes, in detail with reference to FIG. 3 to FIG. 5, the reference signal transmission method provided in embodiments of this application.

In some embodiments, a first cyclic shift set may be determined from a first mapping relationship based on information related to a delay range, and a first cyclic shift is further determined from the first cyclic shift set, to transmit a reference signal sequence based on the first cyclic shift. For example, for a process of transmitting the reference signal sequence in embodiments, refer to the reference signal transmission method shown in FIG. 3.

For example, FIG. 3 is a first schematic flowchart of a reference signal transmission method according to an embodiment of this application. The reference signal transmission method is applicable to communication between any two nodes shown in FIG. 2.

As shown in FIG. 3, the reference signal transmission method includes the following steps.

S301: A terminal device determines a first cyclic shift set based on a first mapping relationship and first information.

The terminal device may be any terminal device in FIG. 2.

The first mapping relationship includes a correspondence between $K$ delay ranges and $K$ cyclic shift sets. The $K$ delay ranges do not overlap each other, the $K$ delay ranges are determined based on a maximum delay, and the $K$ delay ranges are in one-to-one correspondence with the $K$ cyclic shift sets. $K$ is a positive integer greater than 1, any cyclic shift set of the $K$ cyclic shift sets includes at least one cyclic shift, and any two cyclic shifts in the $K$ cyclic shift sets are different.

For related descriptions of the maximum delay, refer to the foregoing descriptions. For example, the maximum delay may be a largest delay in delays of all terminal devices in a service range of a network device. Alternatively, the maximum delay may be a predefined delay. Alternatively, the maximum delay may be a delay notified by a network device to the terminal device by using signaling. The maximum delay may be determined based on one or more of the following: a maximum multipath delay, a maximum root mean square delay, a maximum average delay, a maximum time window, or duration of a cyclic prefix of a symbol.

The delay range may be a delay range obtained through division based on a value of a delay of the terminal device. The delay range may be related to one or more of the following delays: a multipath delay, a root mean square delay, an average delay, a time window, or duration of a cyclic prefix of a symbol. In other words, the delay range is one or more the following: a range of the multipath delay, a range of the root mean square delay, a range of the average delay, a range of the time window, or a range of the duration of the cyclic prefix of the symbol.

It should be noted that the delay range may be determined based on the maximum delay. For example, if the maximum delay is determined based on the maximum multipath delay, the delay range may be determined based on the maximum multipath delay. In other words, in this case, the delay range may be the range of the multipath delay, that is, a multipath delay range. A $k^{\text{th}}$ delay range of the $K$ delay ranges may be represented as $[T_{min}^{k}, T_{max}^{k}]$, $[T_{min}^{k}, T_{max}^{k})$, $(T_{min}^{k}, T_{max}^{k}]$, or $(T_{min}^{k}, T_{max}^{k})$. $k = 0, 1, 2, \ldots,$ or $K - 1$, and $k$ is a sequence number of the delay range. $T_{min}^{k}$ is a smallest value in the $k^{\text{th}}$ delay range or a lower limit of the $k^{\text{th}}$ delay range, and $T_{max}^{k}$ may be referred to as a largest value in the $k^{\text{th}}$ delay range or an upper limit of the $k^{\text{th}}$ delay range.

The maximum multipath delay may be a largest value of maximum multipath delays of time-domain channels of all the terminal devices served by the network device. In this way, each multipath delay range may be determined based on the maximum multipath delay, and one cyclic shift set is determined for each multipath delay range based on an upper limit of each multipath delay range, to increase a total quantity of cyclic shifts and increase a capacity of a communication system. In addition, because a maximum value of a multipath delay of a time-domain channel of any terminal device does not exceed the maximum multipath delay, any terminal device may select a cyclic shift in an appropriate cyclic shift set, to avoid a conflict with another terminal device.

The cyclic shift set is a set of cyclic shifts, and each cyclic shift set includes at least one cyclic shift. For an implementation principle of the quantity of cyclic shifts in the cyclic shift set, refer to the following descriptions, for example, related descriptions of $N_{cs}^{k}$. Details are not described herein.

In addition, it should be noted that, in this embodiment of this application, in a $k^{\text{th}}$ cyclic shift set of the $K$ cyclic shift sets, a minimum distance between any two cyclic shifts is positively correlated with the upper limit of the $k^{\text{th}}$ delay range, $0 \leq k < K,$ and $k$ is an integer.

In this way, the minimum distance between any two cyclic shifts in the $k^{\text{th}}$ cyclic shift set may be designed based on a largest delay (that is, an upper limit) in the $k^{\text{th}}$ delay range, so that the minimum distance between the cyclic shifts in the $k^{\text{th}}$ cyclic shift set can be reduced as much as possible, thereby increasing a quantity of cyclic shifts in the $k^{\text{th}}$ delay range, and further increasing a total quantity of cyclic shifts.

In the $k^{\text{th}}$ cyclic shift set of the $K$ cyclic shift sets, a quantity of cyclic shifts is positively correlated with the upper limit (which may be referred to as the largest delay of the $k^{\text{th}}$ delay range) of the $k^{\text{th}}$ delay range and symbol duration, $0 \leq k < K,$ and $k$ is an integer.

In this way, the quantity of cyclic shifts in the $k^{\text{th}}$ cyclic shift set may be designed based on the largest delay in the $k^{\text{th}}$ delay range, and the quantity of cyclic shifts in the $k^{\text{th}}$ cyclic shift set may be increased as much as possible, thereby increasing a total quantity of cyclic shifts.

Optionally, each cyclic shift in the $k^{\text{th}}$ cyclic shift set corresponds to one cyclic shift index.

The $K$ delay ranges do not overlap each other, and the $K$ delay ranges are determined based on the maximum delay. In other words, delays in different delay ranges in the $K$ delay ranges are different (to be specific, if the delay of the terminal device belongs to the $k^{th}$ delay range, the delay of the terminal device does not belong to another delay range), and each of the $K$ delay ranges is related to the maximum delay. For example, if the maximum delay is $T_{max}$, and $K$ is 3, the $K$ delay ranges may be respectively: [0, $T_{max}$/3), [$T_{max}$/3, 2$T_{max}$/3), and [2$T_{max}$/3, $T_{max}$]; [0, $T_{max}$/3), [$T_{max}$/3, 2$T_{max}$/3), and [2$T_{max}$/3, $T_{max}$); or [0, $T_{max}$/3), [$T_{max}$/3, $T_{max}$/2), and [$T_{max}$/ 2, $T_{max}$]. In this case, there are also three cyclic shift sets. The delay of the terminal device belongs to a delay range, in other words, the range includes the delay of the terminal device. For example, if the range is $[T^k_{min}, T^k_{max})$, and the delay of the terminal device is $t_{delay}$, when $T^k_{min} \leq t_{delay} < T^k_{max}$, it indicates that $t_{delay}$ belongs to the range $[T^k_{min}, T^k_{max})$, or the range $[T^k_{min}, T^k_{max})$ includes $t_{delay}$, and may be represented as $t_{delay} \in [T^k_{min}, T^k_{max})$.

The $K$ delay ranges are in one-to-one correspondence with the $K$ cyclic shift sets. In other words, each delay range corresponds to one cyclic shift set, and cyclic shift sets corresponding to different delay ranges are different. For example, the $K$ delay ranges include [0, $T_{max}$/3), [$T_{max}$/3, 2$T_{max}$/3), and [2$T_{max}$/3, $T_{max}$]. In this case, the delay range [0, $T_{max}$/3) corresponds to a cyclic shift set $P_0$, the delay range [$T_{max}$/3, 2$T_{max}$/3) corresponds to a cyclic shift set $P_1$, and the delay range [2$T_{max}$/3, $T_{max}$] corresponds to a cyclic shift set $P_2$. In this case, a correspondence between a delay range and a cyclic shift set in the first mapping relationship is shown in the following Table 1.

Table 1

| Delay range | [0, $T_{max}$/3) | [$T_{max}$/3, 2$T_{max}$/3) | [2$T_{max}$/3, $T_{max}$] |
|---|---|---|---|
| Cyclic shift set | Cyclic shift set $P_0$ | Cyclic shift set $P_1$ | Cyclic shift set $P_2$ |

The first information may include delay information of the terminal device or a first index.

The delay information of the terminal device may include one or more of the following delays: a multipath delay of the terminal device, a root mean square delay of the terminal device, an average delay of the terminal device, a time window of the terminal device, or duration of a cyclic prefix of a symbol of the terminal device. It should be noted that the delay in the delay information is related to a maximum delay of the terminal device. For example, the delay in the delay information may be the multipath delay of the terminal device. Further, the delay in the delay information may be a maximum multipath delay of the terminal device. The delay information of the terminal device may be determined by the terminal device or may be from the network device.

For example, the delay information of the terminal device may be obtained by the terminal device in a sensing (sensing) manner. For example, the terminal device may send a signal such as a carrier signal or a monophonic signal as a sensing signal, then receive a signal reflected by the network device and/or a surrounding environmental object, and obtain the delay of the terminal device through estimation based on the received signal, to obtain the delay information.

For another example, the delay information of the terminal device may be from the network device. For example, the network device may perform channel estimation based on a reference signal that has been received from the terminal device to obtain the delay information, and include the delay information in signaling to notify the terminal device. The signaling that carries the delay information may be higher layer signaling, for example, radio resource control (radio resource control, RRC) signaling.

The first index may be an index of a delay range. The first index may be from the network device.

When the first information includes the delay information of the terminal device, that the terminal device determines the first cyclic shift set based on the first mapping relationship and the first information in S301 may include: The terminal device determines, as the first cyclic shift set, a cyclic shift set corresponding to a delay range to which the delay in the delay information of the terminal device belongs.

In this way, the delay of the terminal device can match the first cyclic shift set, to balance both the delay and interference.

The mapping relationship shown in Table 1 is used as an example. If the delay $t_{delay}$ of the terminal device is in the delay range [$T_{max}$/3, 2$T_{max}$/3), the first cyclic shift set is the cyclic shift set $P_1$.

When the first information includes the first index, the method shown in FIG. 3 may further include: The terminal device receives the first information from a network device. The first information includes the first index. That the terminal device determines the first cyclic shift set based on the first mapping relationship and the first information in S301 may include: The terminal device determines the first cyclic shift set based on the first index and the first mapping relationship. The terminal device determines, as the first cyclic shift set, a cyclic shift set corresponding to the delay range indicated by the first index.

In this way, the network device includes the first index in the first information to indicate the delay range, thereby reducing signaling overheads and improving communication efficiency.

For example, the $K$ delay ranges include $[0, T_{max}/3)$, $[T_{max}/3, 2T_{max}/3)$, and $[2T_{max}/3, T_{max}]$. The delay range $[0, T_{max}/3)$ corresponds to the cyclic shift set $P_0$, the delay range $[T_{max}/3, 2T_{max}/3)$ corresponds to the cyclic shift set $P_1$, the delay range $[2T_{max}/3, T_{max}]$ corresponds to the cyclic shift set $P_2$, an index of the delay range $[0, T_{max}/3)$ is a range index #0, an index of the delay range $[T_{max}/3, 2T_{max}/3)$ is a range index #1, and an index of the delay range $[2T_{max}/3, T_{max}]$ is a range index #2. In this case, a correspondence between a range index, a delay range, and a cyclic shift set is shown in the following Table 2. If the first index is the range index #1, the first cyclic shift set is the cyclic shift set $P_1$.

Table 2

| Range index | Range index #0 | Range index #1 | Range index #2 |
|---|---|---|---|
| Delay range | $[0, T_{max}/3)$ | $[T_{max}/3, 2T_{max}/3)$ | $[2T_{max}/3, T_{max}]$ |
| Cyclic shift set | Cyclic shift set $P_0$ | Cyclic shift set $P_1$ | Cyclic shift set $P_2$ |

It should be noted that, in some possible embodiments, the cyclic shift may also be referred to as a cyclic shift value.

S302: The terminal device obtains a first cyclic shift of a reference signal sequence based on the first cyclic shift set.

The reference signal sequence may be any one of the following: a ZC sequence, a pseudo random noise (pseudo noise, PN) sequence, and a quadrature phase shift keying (quadrature phase shift keying, QPSK) sequence generated based on a pseudo random gold sequence.

In a possible design solution, the terminal device may determine the first cyclic shift from the first cyclic shift set.

For example, the terminal device may randomly determine the first cyclic shift from cyclic shifts in the first cyclic shift set. In this case, the terminal device may send the first cyclic shift to the network device. For example, the first cyclic shift may be carried in data sent by the terminal device.

For example, a first cyclic shift set $(P_1)$ is a 1st cyclic shift set, and the 1st cyclic shift set includes three cyclic shifts. A 0th cyclic shift in the first cyclic shift set is $\alpha_1^0$, a 1st cyclic shift in the first cyclic shift set is $\alpha_1^1$, and a 2nd cyclic shift in the first cyclic shift set is $\alpha_1^2$, that is $P_1 = \{\alpha_1^0, \alpha_1^1, \alpha_1^2\}$. In this case, the terminal device may determine $\alpha_1^0$ as the first cyclic shift, determine $\alpha_1^1$ as a cyclic shift, or determine $\alpha_1^2$ as a cyclic shift.

In a possible design solution, the terminal device may receive a second index from the network device, and determine the first cyclic shift from the first cyclic shift set based on the second index. The second index is a cyclic shift index of the first cyclic shift.

The second index may be carried in signaling, for example, downlink control signaling (downlink control indicator, DCI). In this way, the network device may indicate the cyclic shift, and the network device may flexibly configure the cyclic shift based on a system requirement, to avoid or reduce a probability that reference signals transmitted by different terminal devices collide.

For example, a correspondence between a cyclic shift in the 1st cyclic shift set and an index of the cyclic shift in the 1st cyclic shift set is shown in the following Table 3. A cyclic shift index of $\alpha_1^0$ is a cyclic shift index #0, a cyclic shift index of $\alpha_1^1$ is a cyclic shift index #1, and a cyclic shift index of $\alpha_1^2$ is a cyclic shift index #2. If the second index is the cyclic shift index #1, the first cyclic shift is $\alpha_1^1$.

Table 3

| Index of the cyclic shift | Cyclic shift index #0 | Cyclic shift index #1 | Cyclic shift index #2 |
|---|---|---|---|
| Cyclic shift | $\alpha_1^0$ | $\alpha_1^1$ | $\alpha_1^2$ |

S303: The terminal device sends the reference signal sequence to the network device based on the first cyclic shift. Correspondingly, the network device receives the reference signal sequence from the terminal device.

For example, the terminal device may generate the reference signal sequence based on the first cyclic shift, and send the reference signal sequence to the network device.

The terminal device may determine the first cyclic shift set based on the first mapping relationship and the first information, obtain the first cyclic shift of the reference signal sequence based on the first cyclic shift set, and send the reference signal sequence based on the first cyclic shift.

**In** this way, one cyclic shift set may be determined for each delay range based on an upper limit of each delay range, so that the total quantity of cyclic shifts can be increased, and the capacity of the communication system can be increased.

S304: The network device obtains range information.

The range information indicates a delay range to which the delay of the terminal device belongs. For example, the range information may include the delay of the terminal device.

For example, the delay of the terminal device may be one of the following: the multipath delay of the terminal device, the root mean square delay of the terminal device, the average delay of the terminal device, the time window of the terminal device, or the duration of the cyclic prefix of the symbol.

For example, the delay of the terminal device may be the multipath delay of the terminal device. Further, the multipath delay of the terminal device may be the maximum multipath delay.

S305: The network device determines the first cyclic shift set based on the range information and the first mapping relationship.

For an implementation principle of S305, refer to the principle of S301. Details are not described herein again.

S306: The network device demodulates the reference signal sequence based on the first cyclic shift set.

In this embodiment of this application, the first mapping relationship may be configured by the network device or specified in a protocol.

In some scenarios, the first mapping relationship on the terminal device is configured by the network device. In this case, before S301, the reference signal transmission method shown in FIG. 3 may further include: The network device sends mapping relationship indication information. Correspondingly, the terminal device receives the mapping relationship indication information from a network device. The mapping relationship indication information indicates the first mapping relationship. Optionally, if there is no mapping relationship on the terminal device, the first mapping relationship may be carried in the mapping relationship indication information. For example, when a plurality of mapping relationships are configured on the terminal device, the network device may indicate the first mapping relationship from the plurality of mapping relationships, to improve flexibility.

Alternatively, optionally, when a plurality of mapping relationships are configured on the terminal device, or the plurality of mapping relationships are agreed on in a protocol, the mapping relationship indication information indicates the first mapping relationship in the plurality of mapping relationships configured on the terminal device. For example, the mapping relationship indication information may include identification information of the first mapping relationship. For example, the plurality of mapping relationships configured on the terminal device include a mapping relationship 0 to a mapping relationship 5. If identification information of the mapping relationship 3 is carried in the mapping relationship indication information, the mapping relationship 3 is the first mapping relationship. In this way, when the plurality of mapping relationships are configured on the terminal device, the network device may indicate the first mapping relationship from the plurality of mapping relationships, to improve flexibility.

The reference signal transmission method shown in FIG. 3 may further include: The network device sends second information to the terminal device. Correspondingly, the terminal device receives the second information from a network device. The second information indicates the maximum delay.

It may be understood that the second information may be carried in the RRC signaling.

For example, if the plurality of mapping relationships (the mapping relationship 0 to the mapping relationship 2) are configured on the terminal device, and ranges of the plurality of mapping relationships are represented by using $T_{max}$, delay ranges in the mapping relationship 0 include $[0, T_{max}/3)$, $[T_{max}/3, 2T_{max}/3)$, and $[2T_{max}/3, T_{max}]$; delay ranges in the mapping relationship 1 include $[0, T_{max}/4)$, $[T_{max}/4, 2T_{max}/3)$, and $[2T_{max}/3, T_{max})$; and delay ranges in the mapping relationship 2 include $[0, T_{max}/3)$, $[T_{max}/3, T_{max}/2)$, and $[T_{max}/2, T_{max}]$. In this case, there are also three cyclic shift sets. In this case, if the terminal device receives the second indication information from a network device, the terminal device may determine the mapping relationship 0 to the mapping relationship 2.

In this way, the network device may indicate the maximum delay, and the terminal device may determine the first mapping relationship based on the maximum delay, to improve flexibility.

For ease of understanding, the following further describes the first mapping relationship in this embodiment of this application with reference to examples.

The $k^{th}$ cyclic shift set in the $K$ cyclic shift sets in the first mapping relationship may be represented as $P_k$, the $k^{th}$ cyclic shift set includes $N_{cs}^k$ elements, and each element is a cyclic shift. In other words, the quantity of cyclic shifts in the $k^{th}$ cyclic shift set is $N_{cs}^k$. An $i^{th}$ element (namely, an $i^{th}$ cyclic shift) in the $k^{th}$ cyclic shift set is represented as $\alpha_k^i$. For the $k^{th}$ cyclic shift set, a value of $i$ is 0 to $N_{cs}^k - 1$. In this case, the $k^{th}$ cyclic shift set $P_k$ may be represented as $P_k =$

$$\{\alpha_k^0, \ldots, \alpha_k^i, \ldots, \alpha_k^{N_{cs}^k - 1}\}$$

Optionally, the quantity $N_{cs}^k$ of cyclic shifts in the $k$th cyclic shift set is related to the largest value $T_{max}^k$ in the $k$th delay range. For example, a quantity of cyclic shifts in a cyclic shift set in the first mapping relationship may satisfy a relationship shown in the following formula (1):

$$\sum_{k=0}^{K-1} N_{cs}^k T_{max}^k \leq N_{cs,base} T_{max} \tag{1}$$

$T_{max}^k$ is the largest value (the upper limit) in the $k$th delay range, $N_{cs,base}$ is a quantity of basic cyclic shifts, and $N_{cs,base}$ may be determined based on the maximum delay $T_{max}$ and a symbol. For example, the quantity of basic cyclic shifts may satisfy a relationship shown in the following formula (2):

$$N_{cs,base} T_{max} \leq T_{symb} \tag{2}$$

For example, $N_{cs,base}$ may be a maximum value of a positive integer that satisfies the formula (2).

For example, it is assumed that the largest value in the $k$th delay range satisfies a relationship shown in the following formula (3):

$$T_{max}^k = T_{max}(k + 1)/K \tag{3}$$

The formula (3) may be transformed into the following formula (4):

$$\sum_{k=0}^{K-1} N_{cs}^k (k + 1) \leq K N_{cs,base} \tag{4}$$

Assuming that $K = 3$ and $N_{cs,base} = 6$, a quantity of cyclic shifts in the $K$ cyclic shift sets satisfies a relationship shown in the following formula (5):

$$N_{cs}^0 + 2N_{cs}^1 + 3N_{cs}^2 \leq 18 \tag{5}$$

A plurality of possible values of the quantity of cyclic shifts may be obtained by solving the formula (5), for example $N_{cs}^0 = 6, N_{cs}^1 = 3$, and $N_{cs}^2 = 2$; or $N_{cs}^0 = 3, N_{cs}^1 = 3$, and $N_{cs}^2 = 3$.

Alternatively, optionally, a quantity of cyclic shifts in the cyclic shift set in the first mapping relationship satisfies a relationship shown in the following formula (6):

$$\sum_{k=0}^{K-1} N_{cs}^k T_{max}^k \leq T_{symb} \tag{6}$$

$T_{symb}$ is duration of a symbol.

It may be understood that a length (or referred to as duration) of a CS area corresponding to one cyclic shift in the $k$th cyclic shift set is related to the largest value $T_{max}^k$ in the $k$th delay range. For example, the length of the CS area is the same as $T_{max}^k$. If the quantity of cyclic shifts in the $k$th cyclic shift set is $N_{cs}^k$, a total length of $N_{cs}^k$ CS areas corresponding to the $N_{cs}^k$ cyclic shifts is $N_{cs}^k T_{max}^k$. A total length of CS areas corresponding to cyclic shifts in all cyclic shift sets should not exceed the duration $T_{symb}$ of the symbol or $N_{cs,base} T_{max}$. For example, in the formula (6), the left side of the equation is the total length of the CS areas corresponding to the cyclic shifts in all the cyclic shift sets, and the total length does not exceed the duration $T_{symb}$ of the symbol.

In a possible design solution, a minimum value of a distance between any two cyclic shifts in the $k$th cyclic shift set is related to the largest value $T_{max}^k$ in the $k$th delay range.

For example, a larger largest value $T_{max}^k$ in the $k$th delay range indicates a larger distance between any two cyclic shifts in the $k$th cyclic shift set, in other words, the distance between any two cyclic shifts in the $k$th cyclic shift set is positively correlated with the largest value $T_{max}^k$ in the $k$th delay range. The distance between any two cyclic shifts in the $k$th cyclic shift set may be an absolute value of a difference between the two cyclic shifts.

Optionally, a distance between two adjacent cyclic shifts in the $k$th cyclic shift set $P_k$ is the same. In this way, when the distance between two adjacent cyclic shifts is the smallest, a quantity of cyclic shifts can be increased, and the capacity can be further increased.

When the distance between two adjacent cyclic shifts in the $k$th cyclic shift set $P_k$ is the same, the minimum value of the distance between any two cyclic shifts is the distance between two adjacent cyclic shifts.

In a possible design solution, the cyclic shifts in the $k$th cyclic shift set $P_k$ may be sequentially arranged in accordance with values, for example, arranged in ascending order or descending order. For ease of understanding, in the subsequent descriptions, the elements in the $k$th cyclic shift set $P_k$ are sequentially arranged in accordance with the values, and $P_k = \{\alpha_k^0, \dots, \alpha_k^i, \dots, \alpha_k^{N_{cs}^k - 1}\}$.

Optionally, the $i$th cyclic shift $\alpha_k^i$ in the $k$th cyclic shift set may be determined based on an index $n_k^i$ of the $i$th cyclic shift and $N_{cs,step}^k$. For example, the $i$th cyclic shift $\alpha_k^i$ in the $k$th cyclic shift set may satisfy a relationship shown in the following formula (7) or formula (8):

$$\alpha_k^i = \frac{2\pi(n_k^i \bmod N_{cs,step}^k)}{N_{cs,step}^k} \qquad (7)$$

$$\alpha_k^i = \frac{2\pi n_k^i}{N_{cs,step}^k} \qquad (8)$$

$mod$ represents a modulo operation. $N_{cs,step}^k$ is a total quantity of cyclic shifts in the $k$th delay range, $N_{cs,step}^k$ is a positive integer, and $N_{cs,step}^k$ may be predefined, or may be notified by the network device to the terminal device by using signaling, for example, the radio resource control (radio resource control, RRC) signaling. Values of the parameter $N_{cs,step}^k$ corresponding to different cyclic shift sets may be the same. In this case, the parameter $N_{cs,step}^k$ may be expressed as $N_{cs,step}$, that is, $N_{cs,step} = N_{cs,step}^k$. $n_k^i$ is an index of a $k$th cyclic shift. For an implementation principle of $n_k^i$, refer to the following related descriptions of the index of the cyclic shift. Details are not described herein again. $N_{cs,step}^k$ may be notified by the network device to the terminal device by using the RRC signaling.

The elements (cyclic shifts) in the $k$th cyclic shift set $P_k$ may be sequentially arranged in accordance with the values, for example, arranged in ascending order or descending order. The distance between two adjacent cyclic shifts in the $k$th cyclic shift set $P_k$ may be the same, in other words, two adjacent cyclic shifts in a same cyclic shift set satisfy a relationship shown in the following formula (9):

$$\alpha_k^i - \alpha_k^{i+1} = \alpha_k^{i+1} - \alpha_k^{i+2} \qquad (9)$$

It may be learned from the formula (9) that the two adjacent cyclic shifts in the same cyclic shift set also satisfy a relationship shown in the following formula (10):

$$\left| \alpha_k^i - \alpha_k^{i+1} \right| = \left| \alpha_k^{i+1} - \alpha_k^{i+2} \right| \qquad (10)$$

In this case, the distance between two adjacent cyclic shifts may be designed, so that the distance between the two adjacent cyclic shifts is as small as possible, to increase a quantity of cyclic shifts.

The minimum value of the distance between any two cyclic shifts in the $k$th cyclic shift set is related to the largest value $T_{max}^k$ in the $k$th delay range, that is, a value of $\left|\alpha_k^i - \alpha_k^{i+1}\right|$ is related to $T_{max}^k$.

Further, when the cyclic shifts in the $k$th cyclic shift set $P_k$ are sequentially arranged in accordance with the values, assuming that the distance between two adjacent cyclic shifts in the $k$th cyclic shift set $P_k$ are the same, the distance between the two adjacent cyclic shifts in the $k$th cyclic shift set $P_k$ may satisfy one or more relationships in the following formula (11) to formula (16):

$$\left|\alpha_k^{i+1} - \alpha_k^i\right| = T_{max}^k/(T_{max} \times N_{cs,base}) \tag{11}$$

$$\left|\alpha_k^{i+1} - \alpha_k^i\right| = 1/\left\lceil(T_{max} \times N_{cs,base})/T_{max}^k\right\rceil \tag{12}$$

$$\left|\alpha_k^{i+1} - \alpha_k^i\right| = T_{max}^k/T_{symb} \tag{13}$$

$$\left|\alpha_k^{i+1} - \alpha_k^i\right| = 1/\left\lceil T_{symb}/T_{max}^k\right\rceil \tag{14}$$

$$\left|\alpha_k^{i+1} - \alpha_k^i\right| = 1/round(\frac{T_{max} \times N_{cs,base}}{T_{max}^k} + 0.5) \tag{15}$$

$$\left|\alpha_k^{i+1} - \alpha_k^i\right| = 1/round(T_{symb}/T_{max}^k + 0.5) \tag{16}$$

| | represents taking an absolute value, ⌈ ⌉represents a rounding-up operation, and *round*( ) represents a rounding-off operation.

It should be noted that, in the first mapping relationship, a cyclic shift may alternatively be represented by using a cyclic shift index. In the $k$th cyclic shift set of the $K$ cyclic shift sets in the first mapping relationship, indexes of all cyclic shifts may also be referred to as a cyclic shift index set $n_k$, an index of the $i$th element (namely, the $i$th cyclic shift) in the $k$th cyclic shift set is represented as $n_k^i$, and the $k$th cyclic shift index set $n_k$ may be represented as $n_k = \{n_k^0, \ldots, n_k^i, \ldots, n_k^{N_{cs}^k-1}\}$. $n_k^i$ is the index of the $i$th cyclic shift in the $k$th cyclic shift set.

It may be understood that the $K$ delay ranges are in one-to-one correspondence with the $K$ cyclic shift sets, and it can be learned that the $K$ delay ranges are in one-to-one correspondence with cyclic shift index sets of the $K$ cyclic shift sets.

In a possible design solution, a minimum value of a distance between any two cyclic shift indexes in the cyclic shift index set $n_k$ of the $k$th cyclic shift set is related to the largest value $T_{max}^k$ in the $k$th delay range.

In a possible design solution, elements in the cyclic shift index value set $n_k$ of the $k$th cyclic shift set may be arranged in accordance with values, for example, arranged in ascending order or descending order.

A distance between two adjacent cyclic shift indexes in the cyclic shift index set $n_k$ may be the same, in other words, the two adjacent cyclic shift indexes in the cyclic shift index set $n_k$ satisfy a relationship shown in a formula (17):

$$n_k^i - n_k^{i+1} = n_k^{i+1} - n_k^{i+2} \tag{17}$$

When the distance between two adjacent cyclic shift indexes in the cyclic shift index set $n_k$ is the same, the cyclic shift index satisfies a relationship shown in the following relationship formula (18):

$$n_k^i = i \cdot v_k + \Delta_k \tag{18}$$

$v_k$ is a step, $\Delta_k$ is an offset, and $v_k$ and $\Delta_k$ are both integers. $v_k$ and $\Delta_k$ may be predefined or notified by the network device to the terminal device by using signaling. For example, $v_k$ and $\Delta_k$ may be notified by the network device to the terminal device by using the RRC signaling. A value of $v_k$ may also be related to the largest value $T_{max}^k$ in the $k$th delay range and/or the maximum delay $T_{max}$. It may be learned, according to the formula (17) and the formula (18), that the step $v_k$ satisfies a relationship shown in the following formula (19):

$$n_k^{i+1} - n_k^i = v_k \tag{19}$$

In other words, an absolute value of $v_k$ is the distance between two adjacent cyclic shift indexes in the cyclic shift index set $n_k$. For example, a relationship between $v_k$ and the largest value $T_{max}^k$ in the $k$th delay range and/or the maximum delay $T_{max}$ may be determined according to any one of the following formula (20) to formula (25).

Further, when the elements in the cyclic shift index value set $n_k$ of the $k$th cyclic shift set may be arranged in accordance with the values, assuming that a distance between indexes of two adjacent cyclic shifts in the cyclic shift index set $n_k$ is the same, the distance between the indexes of two adjacent cyclic shifts in the cyclic shift index set $n_k$ of the $k$th cyclic shift set may satisfy one or more relationships in the following formula (20) to formula (25):

$$\left| n_k^{i+1} - n_k^i \right| = (T_{max}^k \times N_{cs,step}^k)/(T_{max} \times N_{cs,base}) \tag{20}$$

$$\left| n_k^{i+1} - n_k^i \right| = \left\lceil (T_{max}^k \times N_{cs,step}^k)/(T_{max} \times N_{cs,base}) \right\rceil \tag{21}$$

$$\left| n_k^{i+1} - n_k^i \right| = (T_{max}^k \times N_{cs,step}^k)/T_{symb} \tag{22}$$

$$\left| n_k^{i+1} - n_k^i \right| = \left\lceil (T_{max}^k \times N_{cs,step}^k)/T_{symb} \right\rceil \tag{23}$$

$$\left| n_k^{i+1} - n_k^i \right| = round(\frac{T_{max}^k \times N_{cs,step}^k}{T_{max} \times N_{cs,base}} + 0.5) \tag{24}$$

$$\left| n_k^{i+1} - n_k^i \right| = round(\frac{T_{max}^k \times N_{cs,step}^k}{T_{symb}} + 0.5) \tag{25}$$

For example, when $N_{cs,step} = N_{cs,step}^k$, $N_{cs,step}^k$ in the foregoing formula (20) to formula (25) may be replaced with $N_{cs,step}$. It may be understood that the value of $v_k$ may be determined according to any one of the formula (20) to the formula (25).

In addition, when the step $v_k$ satisfies the formula (18), the cyclic shift $\alpha_k^i$ may satisfy a relationship shown in the following formula (26) or formula (27):

$$\alpha_k^i = \frac{2\pi(i \cdot v_k + \Delta_k) \bmod N_{cs,step}^k}{N_{cs,step}^k} \tag{26}$$

$$\alpha_k^i = \frac{2\pi(i \cdot v_k + \Delta_k)}{N_{cs,step}^k} \tag{27}$$

The following describes the first mapping relationship with reference to different examples.

Example 1: It is assumed that a quantity of cyclic shift sets is $K = 3$ and a quantity of basic cyclic shifts is $N_{cs,base} = 6$. A correspondence between the $K$ delay ranges and the $K$ cyclic shift sets is shown in Table 4.

Table 4

| Sequence number $k$ | Delay range | $k$th cyclic shift set $P_k$ |
|---|---|---|
| 0 | $[0, T_{max}/3)$ | {0, 1/18, 2/18, 3/18, 4/18, 5/18}*$2\pi$ |

(continued)

| Sequence number $k$ | Delay range | $k^{th}$ cyclic shift set $P_k$ |
|---|---|---|
| 1 | $[T_{max}/3, 2T_{max}/3)$ | $\{6/18, 8/18, 10/18\}*2\pi$ |
| 2 | $[2T_{max}/3, T_{max}]$ | $\{12/18, 15/18\}*2\pi$ |

Example 2: It is assumed that a quantity of cyclic shift sets is $K = 3$ and a quantity of basic cyclic shifts is $N_{cs,base} = 6$. For example, a cyclic shift is represented by using an index of the cyclic shift. A correspondence between the $K$ delay ranges, the cyclic shift index sets of the $K$ cyclic shift sets, and $N_{cs,step}^{k}$ is shown in Table 5.

Table 5

| Sequence number $k$ | Delay range | Cyclic shift index set | $N_{cs,step}^{k}$ |
|---|---|---|---|
| 0 | $[0, T_{max}/3)$ | $\{0, 1, 2, 3, 4, 5\}$ | 18 |
| 1 | $[T_{max}/3 , 2T_{max}/3)$ | $\{6, 8, 10\}$ | 18 |
| 2 | $[2T_{max}/3, T_{max}]$ | $\{12, 15\}$ | 18 |

As shown in Table 5, quantities of cyclic shifts in a $0^{th}$ cyclic shift set, a $1^{st}$ cyclic shift set, and a $2^{nd}$ cyclic shift set are 6, 3, and 2 respectively, and a distance between two adjacent cyclic shift index values in each cyclic shift set is the same. That the distance is $(T_{max}^{k} \times N_{cs,step}^{k})/$ $(T_{max} \times N_{cs,base})$ is used as an example. Because $T_{max}^{0} = T_{max}/3$, $T_{max}^{1} = 2T_{max}/3$, and $T_{max}^{2} = T_{max}$, it may be obtained through calculation that a distance between indexes of two adjacent cyclic shifts in the $0^{th}$ cyclic shift set is 1, a distance between indexes of two adjacent cyclic shifts in the $1^{st}$ cyclic shift set is 2, and a distance between indexes of two adjacent cyclic shifts in the $2^{nd}$ cyclic shift set is 3. When $n_k^i$ is expressed by $n_k^i = i \cdot v_k + \Delta_k$, it may be learned from Table 5 that $v_0 = 1$, $v_1 = 2$, and $v_2 = 3$; or $\Delta_0 = 0$, $\Delta_1 = 6$, and $\Delta_2 = 12$.

In the cyclic shift shown in Table 5, because a largest value in the $0^{th}$ delay range is $T_{max}/3$, a largest value in the $1^{st}$ delay range is $2 T_{max}/3$, and both the largest values in the $0^{th}$ delay range and the $1^{st}$ delay range are less than the maximum delay $T_{max}$, a distance between indexes of two adjacent cyclic shifts in the $0^{th}$ delay range and a distance between indexes of two adjacent cyclic shifts in the $1^{st}$ delay range may be smaller, and more cyclic shifts may be used, so that a total quantity of cyclic shifts and a quantity of reference signals may be increased.

Example 3: It is assumed that a quantity of cyclic shift sets is $K = 3$ and a quantity of basic cyclic shifts is $N_{cs,base} = 6$. For example, a cyclic shift is represented by using an index of the cyclic shift. A correspondence between the $K$ delay ranges, the cyclic shift index sets of the $K$ cyclic shift sets, and $N_{cs,step}^{k}$ is shown in Table 6.

Table 6

| Sequence number $k$ | Delay range | Cyclic shift index set | $N_{cs,step}^{k}$ |
|---|---|---|---|
| 0 | $[0, T_{max}/3)$ | $\{0, 1, 2\}$ | 18 |
| 1 | $[T_{max}/3, 2T_{max}/3)$ | $\{3, 5, 7\}$ | 18 |
| 2 | $[2T_{max}/3 , T_{max}]$ | $\{9, 12, 15\}$ | 18 |

The $K$ delay ranges in Table 4 to Table 6 are obtained by evenly dividing a range $[0, T_{max}]$. It may be understood that the $K$ delay ranges may alternatively be obtained by unevenly dividing the range $[0, T_{max}]$.

Example 4: It is assumed that a quantity of cyclic shift sets is $K = 3$ and a quantity of basic cyclic shifts is $N_{cs,base} = 6$. For example, a cyclic shift is represented by using an index of the cyclic shift. A correspondence between the $K$ delay ranges and the cyclic shift index sets of the $K$ cyclic shift sets is shown in Table 7.

20

Table 7

| Sequence number $k$ | Delay range | Cyclic shift index set | $N_{cs,step}^{k}$ |
|---|---|---|---|
| 0 | $[0, T_{max}/3)$ | {0, 1, 2, 3, 4, 5} | 18 |
| 1 | $[T_{max}/3, T_{max}/2)$ | {4, 5, 6, 7} | 12 |
| 2 | $[T_{max}/2 , T_{max}]$ | {12, 15} | 18 |

Optionally, when the sequence number is $k$ = 1 in Table 7, a parameter $N_{cs,step}^{1}$ may be 18. In this case, a corresponding cyclic shift index set is {6, 7.5, 9, 10.5}.

Example 5: It is assumed that a quantity of cyclic shift sets is $K$ = 3 and a quantity of basic cyclic shifts is $N_{cs,base}$ = 6. For example, a cyclic shift is represented by using an index of the cyclic shift. A correspondence between the $K$ delay ranges and the cyclic shift index sets of the $K$ cyclic shift sets is shown in Table 8.

Table 8

| Sequence number $k$ | Delay range | Cyclic shift index set | $N_{cs,step}^{k}$ |
|---|---|---|---|
| 0 | $[0, T_{max}/3)$ | {0, 1, 2} | 18 |
| 1 | $[T_{max}/3, T_{max}/2)$ | {2, 3, 4, 5} | 12 |
| 2 | $[T_{max}/2 , T_{max}]$ | {9, 12, 15} | 18 |

Optionally, when the sequence number is $k$ = 1 in Table 8, $N_{cs,step}^{1}$ may be 18. In this case, a corresponding cyclic shift index set is {3, 4.5, 6, 7.5}.

Example 6: It is assumed that a quantity of cyclic shift sets is $K$ = 2 and a quantity of basic cyclic shifts is $N_{cs,base}$ = 6. For example, a cyclic shift is represented by using an index of the cyclic shift. A correspondence between the $K$ delay ranges and the cyclic shift index sets of the $K$ cyclic shift sets is shown in Table 9.

Table 9

| Sequence number $k$ | Delay range | Cyclic shift index set | $N_{cs,step}^{k}$ |
|---|---|---|---|
| 0 | $[0, T_{max}/2)$ | {0, 1, 2, 3, 4, 5} | 12 |
| 1 | $[T_{max}/2 , T_{max}]$ | {6, 8, 10} | 12 |

Optionally, when the sequence number is $k$ = 1 in Table 9, a parameter $N_{cs,step}^{1}$ may be 6. In this case, a corresponding cyclic shift index set is {3, 4, 5}.

Example 7: It is assumed that a quantity of cyclic shift sets is $K$ = 2 and a quantity of basic cyclic shifts is $N_{cs,base}$ = 6. For example, a cyclic shift is represented by using an index of the cyclic shift. A correspondence between the $K$ delay ranges and the cyclic shift index sets of the $K$ cyclic shift sets is shown in Table 10.

Table 10

| Sequence number $k$ | Delay range | Cyclic shift index set | $N_{cs,step}^{k}$ |
|---|---|---|---|
| 0 | $[0, T_{max}/2)$ | {0, 1, 2, 3} | 12 |
| 1 | $[T_{max}/2 , T_{max}]$ | {4, 6, 8, 10} | 12 |

Optionally, when the sequence number is $k$ = 1 in Table 10, a parameter $N_{cs,step}^{1}$ may be 6. In this case, a corresponding cyclic shift index set is {2, 3, 4, 5}.

Example 8: It is assumed that a quantity of cyclic shift sets is $K = 4$ and a quantity of basic cyclic shifts is $N_{cs,base} = 6$. For example, a cyclic shift is represented by using an index of the cyclic shift. A correspondence between the $K$ delay ranges and the cyclic shift index sets of the $K$ cyclic shift sets is shown in Table 11.

Table 11

| Sequence number $k$ | Delay range | Cyclic shift index set | $N_{cs,step}^{k}$ |
|---|---|---|---|
| 0 | $[0, T_{max}/4)$ | {0, 1, 2, 3} | 24 |
| 1 | $[T_{max}/4, T_{max}/2)$ | {4, 6, 8} | 24 |
| 2 | $[T_{max}/2, 3T_{max}/4)$ | {10, 13} | 24 |
| 3 | $[3T_{max}/4, T_{max}]$ | {17, 21} | 24 |

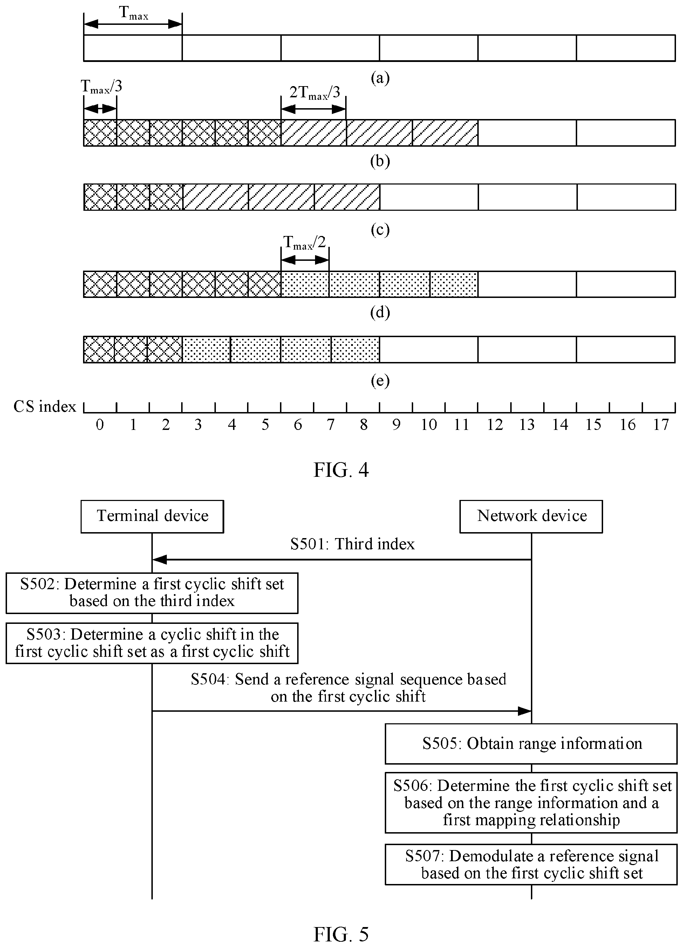

A diagram of the correspondence between the $K$ delay ranges and the cyclic shift index sets of the $K$ cyclic shift sets in Table 5 to Table 8 is shown in FIG. 4 based on the multipath delay and the symbol duration.

In some embodiments, in (a) in FIG. 4, a quantity of cyclic shifts determined based on a maximum delay is 6 (in other words, it may be considered that a quantity of basic cyclic shifts is $N_{cs,base} = 6$), and a time-domain channel estimated by a network device may be divided into six CS areas, where the six CS areas are in one-to-one correspondence with the six cyclic shifts. A length of each CS area is greater than or equal to the maximum delay. As shown in (a) in FIG. 4, the length of each CS area may be the maximum delay.

(b) in FIG. 4 is a diagram of the correspondence between the $K = 3$ delay ranges and the cyclic shift index sets of the $K$ cyclic shift sets shown in Table 5 or Table 6. Largest values in the three delay ranges in Table 5 or Table 6 are

$$T_{max}^0 = T_{max}/3, T_{max}^1 = 2T_{max}/3$$, and $$T_{max}^2 = T_{max}$$. Therefore, as shown in (b) in FIG. 4, a length of a CS area corresponding to a $0^{th}$ cyclic shift set is $T_{max}/3$, a length of a CS area corresponding to a $1^{st}$ cyclic shift set is $T_{max}/3$, and a length of a CS area corresponding to a $2^{nd}$ cyclic shift set is $T_{max}$. A time-domain channel is divided by using the length of the CS area as $T_{max}/3$, and 18 CS areas that sequentially correspond to cyclic shift indexes 0 to 17 may be obtained. As shown in (b) in FIG. 4, a cyclic shift value set of the $0^{th}$ cyclic shift set in Table 5 or Table 6 is {0, 1, 2, 3, 4, 5}, and corresponds to CS areas 0 to 5; a cyclic shift index set of the $1^{st}$ cyclic shift set is {6, 8, 10}, and corresponds to CS areas 6 to 8; and a cyclic shift index set of the $2^{nd}$ cyclic shift set is {12, 15}, and corresponds to CS the areas 9 to 15. Because a length of a CS area corresponding to one cyclic shift in the $1^{st}$ cyclic shift set is $2T_{max}/3$, one cyclic shift in the $1^{st}$ cyclic shift set corresponds to two CS areas whose lengths are $T_{max}/3$. Because a length of a CS area corresponding to one cyclic shift in the $2^{nd}$ cyclic shift set is $T_{max}$, one cyclic shift in the $2^{nd}$ cyclic shift set corresponds to three CS areas whose lengths are $T_{max}/3$.

Similarly, (c) in FIG. 4 is a diagram of the correspondence between the $K = 3$ delay ranges and the cyclic shift index sets of the $K$ cyclic shift sets shown in Table 6. (d) in FIG. 4 is a diagram of the correspondence between the $K = 3$ delay ranges and the cyclic shift index sets of the $K$ cyclic shift sets shown in Table 7. (e) in FIG. 4 is a diagram of the correspondence between the $K = 3$ delay ranges and the cyclic shift index sets of the $K$ cyclic shift sets shown in Table 8.

With reference to FIG. 4 and Table 4 to Table 8, it can be learned that, in comparison with a solution in which a cyclic shift set is determined only based on $N_{cs,base}$ and symbol duration, in the solutions provided in embodiments of this application, a quantity of cyclic shifts can be increased, thereby increasing a capacity of a communication system.

In addition, it should be noted that, in a scenario in which a terminal device uses grant-free transmission, a probability of collision between terminal devices may be further reduced according to the solutions in embodiments of this application, thereby improving communication efficiency.

In some other embodiments, a plurality of cyclic shift sets may be configured in the terminal device, a network device may specify a first cyclic shift set from the plurality of cyclic shift sets, and the terminal device may further determine a first cyclic shift from the first cyclic shift set, to send a reference signal based on the first cyclic shift.

For example, FIG. 5 is a second flowchart of a reference signal transmission method according to an embodiment of this application. The reference signal transmission method is applicable to communication between any two nodes shown in FIG. 2.

$K$ cyclic shift set are configured in a terminal device. Any cyclic shift set of the $K$ cyclic shift sets includes at least one cyclic shift, the $K$ cyclic shift sets are in one-to-one correspondence with $K$ delay ranges, the $K$ delay ranges do not overlap each other, and $K$ is a positive integer greater than 1. Any two cyclic shifts in the $K$ cyclic shift sets are different, and the $K$ delay ranges are determined based on a maximum delay.

In a possible design solution, in a $k^{th}$ cyclic shift set of the $K$ cyclic shift sets, a minimum distance between any two cyclic shifts is positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts is positively correlated with the largest delay in the $k^{th}$ delay range and symbol duration, $0 \leq k < K$, and $k$ is an integer.

For an implementation principle of the K cyclic shift sets, refer to related descriptions in the method embodiment shown in FIG. 3. Details are not described herein again.

As shown in FIG. 5, the reference signal transmission method includes the following steps.

S501: The terminal device receives a third index from a network device.

The third index is an index of a cyclic shift set, that is, a cyclic shift set index.

S502: The terminal device determines a first cyclic shift set based on the third index.

For example, as shown in the following Table 12, the cyclic shift sets include a cyclic shift set $P_0$ to a cyclic shift set $P_2$. If cyclic shift set indexes corresponding to the cyclic shift set $P_0$ to the cyclic shift set $P_2$ are sequentially a cyclic shift set index #0 to a cyclic shift set index #2, and the third index is a cyclic shift set index #1, the cyclic shift set $P_1$ is the first cyclic shift set.

Table 12

| Cyclic shift set index | Cyclic shift set index #0 | Cyclic shift set index #1 | Cyclic shift set index #2 |
| --- | --- | --- | --- |
| Cyclic shift set | Cyclic shift set $P_0$ | Cyclic shift set $P_1$ | Cyclic shift set $P_2$ |

S503: The terminal device determines a cyclic shift in the first cyclic shift set as a first cyclic shift.

In a possible design solution, the terminal device may determine the cyclic shift. In this case, that the terminal device determines the cyclic shift in the first cyclic shift set as the first cyclic shift may include: The terminal device randomly determines the cyclic shift in the first cyclic shift set as the first cyclic shift.

In a possible design solution, the network device may specify the cyclic shift. In this case, the method shown in FIG. 5 may further include: The terminal device receives a fourth index from the network device. That the terminal device determines the cyclic shift in the first cyclic shift set as the first cyclic shift may include: The terminal device determines, as the first cyclic shift, a cyclic shift that is in the first cyclic shift set and that corresponds to the fourth index.

For an implementation principle of S503, refer to an implementation principle of S302. Details are not described herein again.

S504: The terminal device sends a reference signal sequence to the network device based on the first cyclic shift.

For an implementation principle of S504, refer to an implementation principle of S303. Details are not described herein again.

S505: The network device obtains range information.

For an implementation principle of S505, refer to an implementation principle of S304. Details are not described herein again.

S506: The network device determines the first cyclic shift set based on the range information and a first mapping relationship.

For an implementation principle of the first mapping relationship, refer to the descriptions related to the first mapping relationship in the method shown in FIG. 3. For an implementation principle of S506, refer to an implementation principle of S305. Details are not described herein again.

S507: The network device demodulates the reference signal sequence based on the first cyclic shift set.

For an implementation principle of S507, refer to an implementation principle of S306. Details are not described herein again.

In a possible design solution, the method provided in the fourth aspect may further include: The network device sends the third index to the terminal device.

In a possible design solution, the method provided in the fourth aspect may further include: The network device sends group indication information. The group indication information indicates the K cyclic shift sets.

In addition, for a technical effect of the reference signal transmission method provided in FIG. 5, refer to the technical effect of the reference signal transmission method shown in FIG. 3. Details are not described herein again.

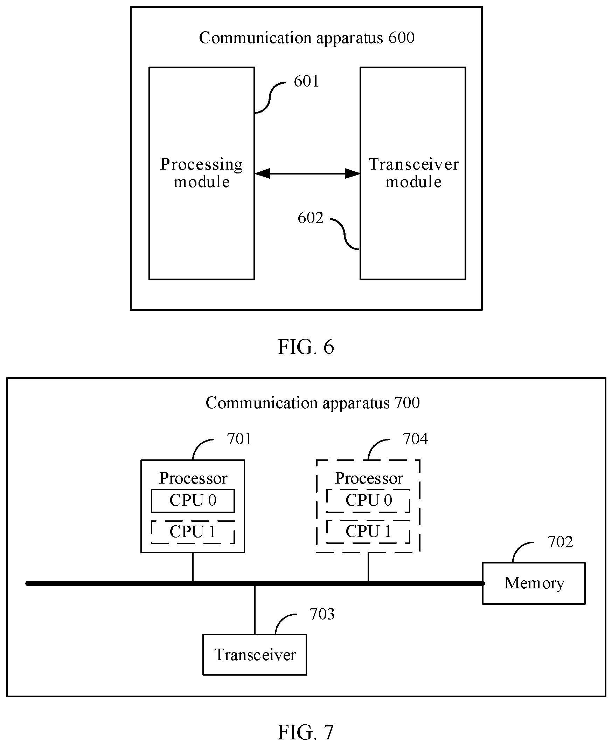

The reference signal transmission method provided in embodiments of this application is described in detail above with reference to FIG. 3 to FIG. 5. The following describes, in detail with reference to FIG. 6 and FIG. 7, a communication apparatus configured to perform the reference signal transmission method according to embodiments of this application.

For example, FIG. 6 is a first diagram of a structure of a communication apparatus 600 according to an embodiment of this application. As shown in FIG. 6, the communication apparatus 600 includes a processing module 601 and a transceiver module 602. For ease of description, FIG. 6 merely shows main components of the communication apparatus 600.

In some embodiments, the communication apparatus 600 may be used in the communication system shown in FIG. 2, and perform a function of the terminal device in the reference signal transmission method shown in FIG. 3.

The processing module 601 is configured to determine a first cyclic shift set based on a first mapping relationship and first information.

The first mapping relationship includes a correspondence between $K$ delay ranges and $K$ cyclic shift sets. The $K$ delay ranges do not overlap each other, and the $K$ delay ranges are in one-to-one correspondence with the $K$ cyclic shift sets. $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay.

The processing module 601 is further configured to obtain a first cyclic shift of a reference signal sequence based on the first cyclic shift set.

The transceiver module 602 is configured to send the reference signal sequence based on the first cyclic shift.

In a possible design solution, the first information may include delay information of a terminal device. The processing module 601 may be specifically configured to determine the first cyclic shift set based on the first mapping relationship and the delay information of the terminal device.

In a possible design solution, the transceiver module 602 may be further configured to receive the first information from a network device. The first information includes a first index. The processing module 601 may be specifically configured to determine the first cyclic shift set based on the first index and the first mapping relationship.

In a possible design solution, the processing module 601 may be specifically configured to: receive a second index by using the transceiver module 602; and determine the first cyclic shift from the first cyclic shift set based on the second index.

In a possible design solution, the maximum delay may be a maximum multipath delay.

Optionally, the delay range may be a multipath delay range.

In a possible design solution, in a $k^{th}$ cyclic shift set of the $K$ cyclic shift sets, a minimum distance between any two cyclic shifts may be positively correlated with a largest delay in a $k$th delay range, $0 \leq k < K$, and $k$ is an integer.

In a possible design solution, in the $k^{th}$ cyclic shift set of the $K$ cyclic shift sets, a quantity of cyclic shifts may be positively correlated with the largest delay in the $k^{th}$ delay range and symbol duration, $0 \leq k < K$, and $k$ is an integer.

In a possible design solution, the transceiver module 602 may be further configured to receive mapping relationship indication information from a network device. The mapping relationship indication information indicates the first mapping relationship.

In a possible design solution, the transceiver module 602 may be further configured to receive second information from a network device. The second information indicates the maximum delay.

Optionally, the transceiver module 602 may include a receiving module and a sending module. The transceiver module 602 is configured to implement a sending function and a receiving function of the communication apparatus 600.

Optionally, the communication apparatus 600 may further include a storage module (not shown in FIG. 6). The storage module stores a program or instructions. When the processing module 601 executes the program or the instructions, the communication apparatus 600 is enabled to perform a function of the terminal device in the reference signal transmission method shown in FIG. 2.

It should be understood that the processing module 601 in the communication apparatus 600 may be implemented by a processor or a processor-related circuit component, and may be a processor or a processing unit. The transceiver module 602 may be implemented by a transceiver or a transceiver-related circuit component, and may be a transceiver or a transceiver unit.

It should be noted that the communication apparatus 600 may be the terminal device shown in FIG. 2, or may be a chip (system) or another part or component disposed in the terminal device, or an apparatus including the terminal device. This is not limited in this embodiment of this application.

In addition, for a technical effect of the communication apparatus 600, refer to the technical effect of the reference signal transmission method shown in FIG. 3. Details are not described herein again.

In some other embodiments, the communication apparatus 600 may be used in the communication system shown in FIG. 2, and perform a function of the network device in the reference signal transmission method shown in FIG. 3.

The processing module 601 is configured to obtain range information.

The processing module 601 is further configured to determine a first cyclic shift set based on the range information and a first mapping relationship.

The first mapping relationship includes a correspondence between $K$ delay ranges and $K$ cyclic shift sets. The $K$ delay ranges are in one-to-one correspondence with the $K$ cyclic shift sets, and the $K$ delay ranges do not overlap each other. $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay.

The transceiver module 602 is configured to receive a reference signal sequence. The processing module 601 is further configured to demodulate the reference signal sequence based on the first cyclic shift set.

In a possible design solution, the range information may include delay information of a terminal device.

In a possible design solution, the transceiver module 602 may be further configured to send first information. The first information includes a first index.

In a possible design solution, the transceiver module 602 may be further configured to send a second index.

In a possible design solution, the maximum delay may be a maximum multipath delay.

In a possible design solution, the delay range may be a multipath delay range.

In a possible design solution, in a $k^{th}$ cyclic shift set of the $K$ cyclic shift sets, a minimum distance between any two cyclic shifts may be positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts may be positively correlated with the largest delay in the $k^{th}$ delay range and symbol duration, $0 \leq k < K$, and $k$ is an integer.

In a possible design solution, the transceiver module 602 may be further configured to send mapping relationship indication information. The mapping relationship indication information indicates the first mapping relationship.

In a possible design solution, the transceiver module 602 may be further configured to send second information. The second information indicates the maximum delay.

Optionally, the transceiver module 602 may include a receiving module and a sending module. The transceiver module 602 is configured to implement a sending function and a receiving function of the communication apparatus 600.

Optionally, the communication apparatus 600 may further include a storage module (not shown in FIG. 6). The storage module stores a program or instructions. When the processing module 601 executes the program or the instructions, the communication apparatus 600 is enabled to perform a function of the network device in the reference signal transmission method shown in FIG. 3.

It should be understood that the processing module 601 in the communication apparatus 600 may be implemented by a processor or a processor-related circuit component, and may be a processor or a processing unit. The transceiver module 602 may be implemented by a transceiver or a transceiver-related circuit component, and may be a transceiver or a transceiver unit.

It should be noted that the communication apparatus 600 may be the network device shown in FIG. 2, or may be a chip (system) or another part or component disposed in the network device, or an apparatus including the network device. This is not limited in this embodiment of this application.

In addition, for a technical effect of the communication apparatus 600, refer to the technical effect of the reference signal transmission method shown in FIG. 3. Details are not described herein again.

In still some embodiments, the communication apparatus 600 may be used in the communication system shown in FIG. 2, and perform a function of the terminal device in the reference signal transmission method shown in FIG. 5.

$K$ cyclic shift sets are configured in the communication apparatus 600. Any cyclic shift set of the $K$ cyclic shift sets includes at least one cyclic shift, the $K$ cyclic shift sets are in one-to-one correspondence with $K$ delay ranges, the $K$ delay ranges do not overlap each other, and $K$ is a positive integer greater than 1. Any two cyclic shifts in the $K$ cyclic shift sets are different, and the $K$ delay ranges are determined based on a maximum delay.

The transceiver module 602 is configured to receive a third index from a network device.

The processing module 601 is configured to: determine a first cyclic shift set based on the third index, and determine a cyclic shift in the first cyclic shift set as a first cyclic shift.

In a possible design solution, the processing module 601 is specifically configured to randomly determine the cyclic shift in the first cyclic shift set as the first cyclic shift.

In a possible design solution, the transceiver module 602 is further configured to receive a second index from the network device. The processing module 601 is specifically configured to determine, as the first cyclic shift by a terminal device, a cyclic shift that is in the first cyclic shift set and that corresponds to the second index.

In a possible design solution, in a $k^{th}$ cyclic shift set of the $K$ cyclic shift sets, a minimum distance between any two cyclic shifts is positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts is positively correlated with the largest delay in the $k^{th}$ delay range and symbol duration, $0 \leq k < K$, and $k$ is an integer.

In a possible design solution, the transceiver module 602 is further configured to receive group indication information from a network device. The group indication information indicates the $K$ cyclic shift sets.

Optionally, the transceiver module 602 may include a receiving module and a sending module. The transceiver module 602 is configured to implement a sending function and a receiving function of the communication apparatus 600.

Optionally, the communication apparatus 600 may further include a storage module (not shown in FIG. 6). The storage module stores a program or instructions. When the processing module 601 executes the program or the instructions, the communication apparatus 600 is enabled to perform a function of the terminal device in the reference signal transmission method shown in FIG. 5.

It should be understood that the processing module 601 in the communication apparatus 600 may be implemented by a processor or a processor-related circuit component, and may be a processor or a processing unit. The transceiver module 602 may be implemented by a transceiver or a transceiver-related circuit component, and may be a transceiver or a transceiver unit.

It should be noted that the communication apparatus 600 may be the terminal device shown in FIG. 2, or may be a chip (system) or another part or component disposed in the terminal device, or an apparatus including the terminal device.

This is not limited in this embodiment of this application.

In addition, for a technical effect of the communication apparatus 600, refer to the technical effect of the reference signal transmission method shown in FIG. 5. Details are not described herein again.

In some other embodiments, the communication apparatus 600 may be used in the communication system shown in FIG. 2, and perform a function of the network device in the reference signal transmission method shown in FIG. 5.

The transceiver module 602 is configured to obtain range information.

The processing module 601 is configured to determine a first cyclic shift set based on the range information and a first mapping relationship.

The transceiver module 602 is further configured to receive a reference signal sequence. The processing module 601 is further configured to demodulate the reference signal sequence based on the first cyclic shift set.

The first mapping relationship includes a correspondence between $K$ delay ranges and $K$ cyclic shift sets. The $K$ delay ranges are in one-to-one correspondence with the $K$ cyclic shift sets, and the $K$ delay ranges do not overlap each other. $K$ is a positive integer greater than 1, any cyclic shift set of the $K$ cyclic shift sets includes at least one cyclic shift, any two cyclic shifts in the $K$ cyclic shift sets are different, and the $K$ delay ranges are determined based on a maximum delay.

In a possible design solution, the transceiver module 602 is further configured to send a third index.

In a possible design solution, in a $k^{th}$ cyclic shift set of the $K$ cyclic shift sets, a minimum distance between any two cyclic shifts is positively correlated with a largest delay in a $k^{th}$ delay range, $0 \leq k < K$, and $k$ is an integer.

In a possible design solution, in the $k^{th}$ cyclic shift set of the $K$ cyclic shift sets, a quantity of cyclic shifts is positively correlated with the largest delay in the $k^{th}$ delay range and symbol duration, $0 \leq k < K$, and $k$ is an integer.

In a possible design solution, the transceiver module 602 is further configured to send group indication information. The group indication information indicates the $K$ cyclic shift sets.

Optionally, the transceiver module 602 may include a receiving module and a sending module. The transceiver module 602 is configured to implement a sending function and a receiving function of the communication apparatus 600.

Optionally, the communication apparatus 600 may further include a storage module (not shown in FIG. 6). The storage module stores a program or instructions. When the processing module 601 executes the program or the instructions, the communication apparatus 600 is enabled to perform a function of the network device in the reference signal transmission method shown in FIG. 5.

It should be understood that the processing module 601 in the communication apparatus 600 may be implemented by a processor or a processor-related circuit component, and may be a processor or a processing unit. The transceiver module 602 may be implemented by a transceiver or a transceiver-related circuit component, and may be a transceiver or a transceiver unit.

It should be noted that the communication apparatus 600 may be the network device shown in FIG. 2, or may be a chip (system) or another part or component disposed in the network device, or an apparatus including the network device. This is not limited in this embodiment of this application.

In addition, for a technical effect of the communication apparatus 600, refer to the technical effect of the reference signal transmission method shown in FIG. 5. Details are not described herein again.

For example, FIG. 7 is a second diagram of a structure of a communication apparatus according to an embodiment of this application. The communication apparatus may be a terminal device or a network device, or a chip (a system) or another part or component that can be disposed in a terminal device or a network device. As shown in FIG. 7, the communication apparatus 700 may include a processor 701.

Optionally, the communication apparatus 700 may further include a memory 702 and/or a transceiver 703. The processor 701 is coupled to the memory 702 and the transceiver 703, for example, may be connected to the memory 702 and the transceiver 703 through a communication bus.

The following describes each part in the communication apparatus 700 in detail with reference to FIG. 7.

The processor 701 is a control center of the communication apparatus 700, and may be one processor, or may be a general term of a plurality of processing elements. For example, the processor 701 is one or more central processing units (central processing units, CPUs), and may be an application specific integrated circuit (application specific integrated circuit, ASIC) or one or more integrated circuits configured to implement embodiments of this application, for example, one or more digital signal processors (digital signal processors, DSPs) or one or more field programmable gate arrays (field programmable gate arrays, FPGAs).

Optionally, the processor 701 may execute various functions of the communication apparatus 700 by running or executing a software program stored in the memory 702 and invoking data stored in the memory 702.

During specific implementation, in an embodiment, the processor 701 may include one or more CPUs, for example, a CPU 0 and a CPU 1 shown in FIG. 7.

During specific implementation, in an embodiment, the communication apparatus 700 may alternatively include a plurality of processors, for example, the processor 701 and a processor 704 shown in FIG. 7. Each of the processors may be a single-core processor (single-CPU), or may be a multi-core processor (multi-CPU). The processor herein may be one or more devices, circuits, and/or processing cores configured to process data (for example, computer program instructions).

The memory 702 is configured to store a software program for performing the solutions of this application, and the processor 701 controls execution of the software program. For specific implementation, refer to the foregoing method embodiments, and details are not described herein again.

Optionally, the memory 702 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in the form of instructions or a data structure and that can be accessed by a computer. This is not limited thereto. The memory 702 may be integrated with the processor 701, or may exist independently, and is coupled to the processor 701 through an interface circuit (not shown in FIG. 7) in the communication apparatus 700. This is not specifically limited in this embodiment of this application.

The transceiver 703 is configured for communication with another communication apparatus. For example, the communication apparatus 700 is a terminal device, and the transceiver 703 may be configured to communicate with a network device or communicate with another terminal device. For another example, the communication apparatus 700 is a network device, and the transceiver 703 may be configured to communicate with a terminal device or communicate with another network device.

Optionally, the transceiver 703 may include a receiver and a transmitter (not separately shown in FIG. 7). The receiver is configured to implement a receiving function, and the transmitter is configured to implement a sending function.

Optionally, the transceiver 703 may be integrated with the processor 701, or may exist independently, and is coupled to the processor 701 through an interface circuit (not shown in FIG. 7) in the communication apparatus 700. This is not specifically limited in this embodiment of this application.

It should be noted that the structure of the communication apparatus 700 shown in FIG. 7 does not constitute a limitation on the communication apparatus. An actual communication apparatus may include more or fewer components than those shown in the figure, or some components may be combined, or different component deployment may be used.

In addition, for a technical effect of the communication apparatus 700, refer to the technical effect of the reference signal transmission method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) serving as an external cache. Through an example rather than limited description, random access memories (random access memories, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in the form of a computer program product. The computer program product includes one or more computer instructions or computer programs. When the computer instructions or computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one item (piece) of the following" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in the form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A reference signal transmission method, wherein the method comprises:

determining a first cyclic shift set based on a first mapping relationship and first information, wherein the first mapping relationship comprises a correspondence between $K$ delay ranges and $K$ cyclic shift sets, the $K$ delay ranges do not overlap each other, the $K$ delay ranges are in one-to-one correspondence with the $K$ cyclic shift sets, $K$ is a positive integer greater than 1, any cyclic shift set of the $K$ cyclic shift sets comprises at least one cyclic shift, any two cyclic shifts in the $K$ cyclic shift sets are different, and the $K$ delay ranges are determined based on a maximum delay;

obtaining a first cyclic shift of a reference signal sequence based on the first cyclic shift set; and

sending the reference signal sequence based on the first cyclic shift.

2. The method according to claim 1, wherein the first information comprises delay information of a terminal device, and the determining a first cyclic shift set based on a first mapping relationship and first information comprises:
determining the first cyclic shift set based on the first mapping relationship and the delay information of the terminal device.

3. The method according to claim 1, wherein before the determining a first cyclic shift set based on a first mapping relationship and first information, the method further comprises:

receiving the first information from a network device, wherein the first information comprises a first index; and
the determining a first cyclic shift set based on a first mapping relationship and first information comprises:
determining the first cyclic shift set based on the first index and the first mapping relationship.

4. The method according to any one of claims 1 to 3, wherein the obtaining a first cyclic shift of a reference signal sequence based on the first cyclic shift set comprises:

receiving a second index; and
determining the first cyclic shift from the first cyclic shift set based on the second index.

5. The method according to any one of claims 1 to 4, wherein the maximum delay is a maximum multipath delay.

6. The method according to claim 5, wherein the delay range is a multipath delay range.

7. The method according to any one of claims 1 to 6, wherein in a $k^{\text{th}}$ cyclic shift set of the $K$ cyclic shift sets, a minimum distance between any two cyclic shifts is positively correlated with a largest delay in a $k^{\text{th}}$ delay range, $0 \leq k < K$, and $k$ is an integer.

8. The method according to any one of claims 1 to 7, wherein in the $k^{\text{th}}$ cyclic shift set of the $K$ cyclic shift sets, a quantity of cyclic shifts is positively correlated with the largest delay in the $k^{\text{th}}$ delay range and symbol duration, $0 \leq k < K$, and $k$ is an integer.

9. The method according to any one of claims 1 to 8, wherein the method further comprises:
receiving mapping relationship indication information from a network device, wherein the mapping relationship indication information indicates the first mapping relationship.

10. The method according to any one of claims 1 to 8, wherein the method further comprises:
receiving second information from a network device, wherein the second information indicates the maximum delay.

11. A reference signal transmission method, wherein the method comprises:

obtaining range information;
determining a first cyclic shift set based on the range information and a first mapping relationship, wherein the first mapping relationship comprises a correspondence between $K$ delay ranges and $K$ cyclic shift sets, the $K$ delay ranges are in one-to-one correspondence with the $K$ cyclic shift sets, the $K$ delay ranges do not overlap each other, $K$ is a positive integer greater than 1, any cyclic shift set of the $K$ cyclic shift sets comprises at least one cyclic shift, any two cyclic shifts in the $K$ cyclic shift sets are different, and the $K$ delay ranges are determined based on a maximum delay;
receiving a reference signal sequence; and
demodulating the reference signal sequence based on the first cyclic shift set.

12. The method according to claim 11, wherein the range information comprises delay information of a terminal device.

13. The method according to claim 11 or 12, wherein before the receiving a reference signal sequence, the method further comprises:
sending first information, wherein the first information comprises a first index.

14. The method according to any one of claims 11 to 13, wherein the method further comprises:
sending a second index.

15. The method according to any one of claims 11 to 14, wherein the maximum delay is a maximum multipath delay.

16. The method according to any one of claims 11 to 15, wherein the delay range is a multipath delay range.

17. The method according to any one of claims 11 to 16, wherein in a $k^{th}$ cyclic shift set of the $K$ cyclic shift sets, a minimum distance between any two cyclic shifts is positively correlated with a largest delay in a $k^{th}$ delay range, $0 \leq k < K,$ and $k$ is an integer.

18. The method according to any one of claims 11 to 17, wherein in the $k^{th}$ cyclic shift set of the $K$ cyclic shift sets, a quantity of cyclic shifts is positively correlated with the largest delay in the $k^{th}$ delay range and symbol duration, $0 \leq k < K,$ and $k$ is an integer.

19. The method according to any one of claims 11 to 18, wherein the method further comprises:
sending mapping relationship indication information, wherein the mapping relationship indication information indicates the first mapping relationship.

20. The method according to any one of claims 11 to 19, wherein the method further comprises:
sending second information, wherein the second information indicates the maximum delay.

21. A communication apparatus, wherein the apparatus comprises a processing module and a transceiver module;

the processing module is configured to determine a first cyclic shift set based on a first mapping relationship and first information, wherein the first mapping relationship comprises a correspondence between $K$ delay ranges and $K$ cyclic shift sets, the $K$ delay ranges do not overlap each other, the $K$ delay ranges are in one-to-one correspondence with the $K$ cyclic shift sets, $K$ is a positive integer greater than 1, any cyclic shift set of the $K$ cyclic shift sets comprises at least one cyclic shift, any two cyclic shifts in the $K$ cyclic shift sets are different, and the $K$ delay ranges are determined based on a maximum delay;
the processing module is configured to obtain a first cyclic shift of a reference signal sequence based on the first cyclic shift set; and
the transceiver module is configured to send the reference signal sequence based on the first cyclic shift.

22. The apparatus according to claim 21, wherein the first information comprises delay information of a terminal device; and
the processing module is specifically configured to determine the first cyclic shift set based on the first mapping relationship and the delay information of the terminal device.

23. The apparatus according to claim 21, wherein

the transceiver module is further configured to receive the first information from a network device, wherein the first information comprises a first index; and
the processing module is specifically configured to determine the first cyclic shift set based on the first index and the first mapping relationship.

24. The apparatus according to any one of claims 21 to 23, wherein

the processing module is specifically configured to: receive a second index by using the transceiver module; and determine the first cyclic shift from the first cyclic shift set based on the second index.

25. The apparatus according to any one of claims 21 to 24, wherein the maximum delay is a maximum multipath delay.

26. The apparatus according to claim 25, wherein the delay range is a multipath delay range.

27. The apparatus according to any one of claims 21 to 26, wherein in a $k^{th}$ cyclic shift set of the $K$ cyclic shift sets, a minimum distance between any two cyclic shifts is positively correlated with a largest delay in a $k^{th}$ delay range, $0 \leq k < K$, and $k$ is an integer.

28. The apparatus according to any one of claims 21 to 27, wherein in the $k^{th}$ cyclic shift set of the $K$ cyclic shift sets, a quantity of cyclic shifts is positively correlated with the largest delay in the $k^{th}$ delay range and symbol duration, $0 \leq k < K$, and $k$ is an integer.

29. The apparatus according to any one of claims 21 to 28, wherein
the transceiver module is further configured to receive mapping relationship indication information from a network device, wherein the mapping relationship indication information indicates the first mapping relationship.

30. The apparatus according to any one of claims 21 to 29, wherein the apparatus further comprises:
the transceiver module is further configured to receive second information from a network device, wherein the second information indicates the maximum delay.

31. A communication apparatus, wherein the apparatus comprises a processing module and a transceiver module;

the processing module is configured to obtain range information;
the processing module is further configured to determine a first cyclic shift set based on the range information and a first mapping relationship, wherein the first mapping relationship comprises a correspondence between $K$ delay ranges and $K$ cyclic shift sets, the $K$ delay ranges are in one-to-one correspondence with the $K$ cyclic shift sets, the $K$ delay ranges do not overlap each other, $K$ is a positive integer greater than 1, any cyclic shift set of the $K$ cyclic shift sets comprises at least one cyclic shift, any two cyclic shifts in the $K$ cyclic shift sets are different, and the $K$ delay ranges are determined based on a maximum delay;
the transceiver module is configured to receive a reference signal sequence; and
the processing module is further configured to demodulate the reference signal sequence based on the first cyclic shift set.

32. The apparatus according to claim 31, wherein the range information comprises delay information of a terminal device.

33. The apparatus according to claim 31 or 32, wherein
the transceiver module is further configured to send first information, wherein the first information comprises a first index.

34. The apparatus according to any one of claims 31 to 33, wherein
the transceiver module is further configured to send a second index.

35. A communication apparatus, comprising a processor, wherein the processor is coupled to a memory; and
the processor is configured to execute a computer program stored in the memory, to enable the communication apparatus to perform the reference signal transmission method according to any one of claims 1 to 20.

36. The apparatus according to claim 35, wherein the communication apparatus further comprises a transceiver, and the transceiver is used by the communication apparatus to exchange information with another communication apparatus.

37. A communication apparatus, comprising a processor and an interface circuit, wherein

the interface circuit is configured to: receive code instructions and transmit the code instructions to the processor; and
the processor is configured to run the code instructions to perform the method according to any one of claims 1 to 20.

38. A computer-readable storage medium, wherein the computer-readable storage medium comprises a computer program or instructions, and when the computer program or the instructions are run on a computer, the computer is enabled to perform the reference signal transmission method according to any one of claims 1 to 20.

39. A computer program product, wherein the computer program product comprises a computer program or instructions, and when the computer program or the instructions are run on a computer, the computer is enabled to perform the reference signal transmission method according to any one of claims 1 to 20.

40. A communication system, wherein the communication system comprises one or more terminal devices and one or more network devices, the terminal device is configured to perform the reference signal transmission method according to any one of claims 1 to 10, and the network device is configured to perform the reference signal transmission method according to any one of claims 11 to 20.

| CS area 0 | CS area 1 | CS area 2 | CS area 3 | Time |

0   $T_{symb}$

FIG. 1

201

202a   202b

FIG. 2

| Terminal device | Network device |

S301: Determine a first cyclic shift set based on a first mapping relationship and first information

S302: Obtain a first cyclic shift of a reference signal sequence based on the first cyclic shift set

S303: Send the reference signal sequence based on the first cyclic shift

S304: Obtain range information

S305: Determine the first cyclic shift set based on the range information and the first mapping relationship

S306: Demodulate a reference signal based on the first cyclic shift set

FIG. 3

$T_{max}$

(a)

$T_{max}/3$      $2T_{max}/3$

(b)

(c)

$T_{max}/2$

(d)

(e)

CS index    0  1  2  3  4  5  6  7  8  9  10  11  12  13  14  15  16  17

FIG. 4

Terminal device                                      Network device

S501: Third index

S502: Determine a first cyclic shift set
based on the third index

S503: Determine a cyclic shift in the
first cyclic shift set as a first cyclic shift

S504: Send a reference signal sequence based
on the first cyclic shift

S505: Obtain range information

S506: Determine the first cyclic shift set
based on the range information and a
first mapping relationship

S507: Demodulate a reference signal
based on the first cyclic shift set

FIG. 5

FIG. 6

FIG. 7

## INTERNATIONAL SEARCH REPORT

International application No.

**PCT/CN2022/108050**

### A. CLASSIFICATION OF SUBJECT MATTER

H04W 72/04(2009.01)i; H04W 74/08(2009.01)i

According to International Patent Classification (IPC) or to both national classification and IPC

### B. FIELDS SEARCHED

Minimum documentation searched (classification system followed by classification symbols)

H04W; H04L; H04J

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 循环, 移位, 时延, 延时, 时间, 区间, 段, 分区, 窗口, 参考信号, 映射, 对应, 容量, 数量, 数目, cyclic, shift, delay, interval, segment, partition, window, RS, map+, correspond+, capacity, quantity, number

### C. DOCUMENTS CONSIDERED TO BE RELEVANT

| Category* | Citation of document, with indication, where appropriate, of the relevant passages | Relevant to claim No. |
|---|---|---|
| A | US 2012113921 A1 (TEXAS INSTRUMENTS INCORPORATED) 10 May 2012 (2012-05-10)<br>description, paragraphs [0045]-[0051] | 1-40 |
| A | US 2017170933 A1 (HUAWEI TECHNOLOGIES CO., LTD.) 15 June 2017 (2017-06-15)<br>entire document | 1-40 |
| A | WO 2022083845 A1 (HUAWEI TECHNOLOGIES CO., LTD.) 28 April 2022 (2022-04-28)<br>entire document | 1-40 |
| A | MOTOROLA. "Cyclic Shift Multiplexing of CSI-RS"<br>*3GPP TSG RAN1#59 R1-094850*, 13 November 2009 (2009-11-13),<br>entire document | 1-40 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 December 2022** | **23 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/108050**

| Patent document cited in search report | | | Publication date (day/month/year) | Patent family member(s) | | | Publication date (day/month/year) |
|---|---|---|---|---|---|---|---|
| US | 2012113921 | A1 | 10 May 2012 | US | 2008051125 | A1 | 28 February 2008 |
| US | 2017170933 | A1 | 15 June 2017 | WO | 2016029482 | A1 | 03 March 2016 |
| | | | | EP | 3188392 | A1 | 05 July 2017 |
| | | | | CN | 105580302 | A | 11 May 2016 |
| WO | 2022083845 | A1 | 28 April 2022 | None | | | |